# EUROPÄISCHE PATENTSCHRIFT

(11) **EP 0 455 184 B1**
(45) Veröffentlichungstag und Bekanntmachung des Hinweises auf die Patenterteilung: **03.08.1994**
(21) Anmeldenummer: 91106886.4
(22) Anmeldetag: 27.04.1991
(51) Int. Cl.: F24J 2/40, F24J 2/04, F24D 19/10, F24D 11/00

(54) **Verfahren zum Heizen und/oder Kühlen eines Gebäudes mit Solarenergie unter Verwendung von transparenter Wärmedämmung und Anlage zur Durchführung des Verfahrens**
Process for heating and/or cooling a building with solar energy using transparent insulation and plant for utilizing same
Procédé de chauffage et/ou refroidissement d'un bâtiment par l'énergie solaire avec utilisation d'une isolation transparente et installation utilisant ce procédé

(30) Priorität: 28.04.1990 DE 4013759
(43) Veröffentlichungstag der Anmeldung: 06.11.1991
(73) Patentinhaber: Rud. Otto Meyer, D-22047 Hamburg (DE)
(72) Erfinder: Heyden, Burkhard, Dipl.-Ing., D-2000 Hamburg 55 (DE); Mengedoht, Gerhard, Dipl.-Ing., D-2000 Hamburg 60 (DE); Koops, Erich, Dipl.-Ing., D-2000 Hamburg 73 (DE)
(74) Vertreter: Richter, Werdermann & Gerbaulet

(56) Entgegenhaltungen:
- EP-A- 0 022 126
- EP-A- 0 034 396
- WO-A-86/02988
- DE-A- 2 610 471
- DE-A- 2 723 503
- DE-A- 2 814 243
- DE-A- 2 901 820
- DE-A- 3 012 267
- DE-A- 3 227 899
- DE-A- 3 230 639
- FR-A- 2 339 142
- FR-A- 2 402 846
- FR-A- 2 444 893
- FR-A- 2 500 596
- FR-A- 2 537 256
- FR-A- 2 538 882
- US-A- 3 977 601
- US-A- 4 034 912
- US-A- 4 061 185
- US-A- 4 143 814
- US-A- 4 258 696
- 'PROCEEDINGS OF MELECON 83' 24. Mai 1983, PROTONOTARIOS,STASSINOPOULOS, CIVALLERI, ATHENS, GREECE, SOLAR CIRCUIT OPTIMIZATION AND MANAGEMENT
- ENERGY CONVERSION AND MANAGEMENT. Bd. 25, Nr. 3, 1985, OXFORD GB Seiten 283-293; OSMAN: 'PERFORMANCE ANALYSIS OF A SOLAR AIR-CONDITIONED VILLA IN THE ARABIAN GULF'
- PATENT ABSTRACTS OF JAPAN vol. 7, no. 197 (M-239)(1342) 27. August 1983 & JP-A-58 095 152 (MATSUSHITA DENDI SANGYO KK) 6. Juni 1983
- PATENT ABSTRACTS OF JAPAN vol. 6, no. 267 (M-182)(1145) 25. Dezember 1982 & JP-A-57 157 957 (KOGYO GIJUTSUIN) 29. September 1982

## Beschreibung

Die Erfindung geht aus von einem Verfahren zum Heizen und/oder Kühlen eines Gebäudes unter Nutzung von Solarenergie, wobei die Außenflächen des Gebäudes mit transparentem Wärmedämmungsmaterial und mit einer Solarenergieabsorptionseinrichtung versehen sind und die Wärmeverluste und die Wärmeaufnahme wegen naturgemäß geringer Energiedichte auf den Außenflächen von Gebäuden derart reguliert werden, daß im Gebäude die Raumtemperaturen einstellbar sein sollen, wie es aus der DE 32 30 639 Al bekannt ist.

Es ist bekannt, transparente Wärmedämmschichten, die für gerichtete und diffuse Sonnenstrahlung durchlässig sind, auf einer dunkel gestrichenen Wandoberfläche der Außenwand eines Gebäudes anzuordnen. Bedingt durch den Wärmewiderstand des Dämmaterials fließt ein Großteil der gewonnenen Wärme durch das Mauerwerk nach innen und wird zeitverzögert in den angrenzenden Raum abgegeben. Diese Wärme kann zur Heizung der angrenzenden Räume in der Fassade ungeregelt gespeichert werden. Durch ihre Durchlässigkeit für Solarstrahlung wirken mit einer transparenten Wärmedämmung versehene Gebäudefassaden wie ein riesiger Absorber. Zur Innenraumregulierung dienen z.B. klimabhängig, elektronisch gesteuerte Rollos in den Fassaden. Diese ermöglichen im Sommer einen Überhitzungsschutz und vermeiden im Winter Wärmeverluste (DE 32 30 639 A1).

Es ist auch bereits ein Verfahren zur gleichmäßigen Klimatisierung von Räumen eines Gebäudes, insbesondere in den Übergangszeiten, vorgeschlagen worden, nach dem vorgesehen ist, daß auf mindestens einer sonnenzugewandten Seite des Gebäudes Sonnenwärme aufgenommen wird, daß die Wärme zu den sonnenabgewandten Teilen des Gebäudes transportiert und in den dort gelegenen Räumen an diese abgegeben wird, wobei vorgesehen ist, daß die Wärme zwischengespeichert wird. Bei der hierzu vorgesehenen Vorrichtung ist auf der sonnenzugewandten Seite des Gebäudes eine Sonnenwärme aufnehmende Einrichtung angeordnet, die über dünne Leitungen mit in den sonnenabgewandten Teilen des Gebäudes angeordneten, Wärme abgebenden Einrichtungen verbunden ist, wobei in den Leitungen zumindest eine Umwälzpumpe und mindestens ein Wärmespeicher vorgesehen ist (DE 35 08 876 A1).

Es ist auch bereits eine Wärmespeicher-Heizung bekannt, die mittels Sonnenkollektoren und/oder Wärmepumpen betrieben wird und der Beheizung der Innenräume von Gebäuden mit Außenmauern aus Ziegeln, Beton oder anderen Steinen dient, wobei die Außenmauern außen in einem gewissen Abstand eine fassadenseitig bis auf Türen oder Fenster vollständig geschlossene Wand aufweisen, die einen Zwischenraum einschließt, wobei die vorgesetzte Wand aus einem Thermisch isolierend wirkenden Material besteht und im unteren Teil des zwischen der Außenmauer und der Isolierwand gebildeten Zwischenraums Wärmeaustauscher angeordnet sind, die mittels Sonnenkollektoren und/oder Wärmepumpen beheizbar sind. Hierbei wird die mittels Wärmepumpen bzw. Sonnenkollektoren gewonnene Wärme in das durch eine äußere Wärmeisolierung geschützte Gebäudemauerwerk eingespeichert, so daß eine relativ gleichmäßige, jedoch ungeregelte Wärmeabgabe in die Gebäudeinnenräume erfolgt (DE 28 39 363 C2).

Um Sonnenenergie auch bei größeren, mit einer Vorhangwand ausgerüsteten Gebäuden als zusätzliche Wärmequelle nutzbar zu machen, ist bereits ein Fassadenelement für eine Gebäude-Vorhangwand vorgeschlagen worden, das aus einem feuerbeständigen und wärmedämmenden Brüstungspaneel und einem innenseitig angeordneten, an eine ein Wärmetransportmedium führende Leitung angeschlossenen Wärmetauscher besteht, wobei der Wärmetauscher mit einem weiteren, auf der Außenseite des Brüstungspaneels angeordneten Wärmetauscher in Form eines Solarenergie-Kollektors zu einem geschlossenen Wärmetauschsystem verbunden ist. Mit einem solchen Fassadenelement ist die Möglichkeit geschaffen worden, nicht nur Konstruktionselemente eines üblichen Heizungssystems in die Vorhangwand zu integrieren, sondern es ist ein geschlossenes System für jedes Fassadenelement geschaffen worden. Hierbei ist auch vorgesehen, daß der außenliegende Wärmetauscher und der innenliegende Wärmetauscher auch als Austreiber bzw. Verdampfer eines Absorptionskühlkreislaufes einsetzbar ist, wodurch das Fassadenelement in der warmen Jahreszeit zur Kühlung des jeweiligen Gebäudeteils einsetzbar ist. Das Fassadenelement ist dabei jedoch ganz besonders für eine dezentrale Gebäudetemperierung vorgesehen, wobei die Integration in ein Gesamtsystem weder vorgesehen noch mit einfachen Mitteln durchführbar ist (DE 27 08 128 A1).

Es ist bereits bekannt, eine vollständige Energieangebots- und Bedarfsbilanz in einem Gebäude durch eine computergesteuerte Zentraleinheit zu erstellen. Dabei erfaßt eine Zentraleinheit die betreffenden Variablen in allen Räumen (WO 86/02988).

Ein System zur Gebäudeheizung, bei dem Solarenergie und konventionelle Energie verwendet wird und eine zentrale Steuerungseinheit die Wärmeverteilung einem besonderen Prioritätsrang der Energiequellen folgend die Wärmeverteilung optimiert, ist aus der US-A-40 34 912 bekannt.

Ein Solarkollektor mit einem Speicher ist aus der EP-A-0 034 396 bekannt.

Ein Solarheizmodul zur Umwandlung von Solarstrahlung in Wärmeenergie und zur Verwendung zum Heizen und/oder Kühlen eines Gebäudes ist aus der FR-A-23 39 142 bekannt. Bei diesem Solarheizmodul ist an der der Sonneneinstrahlung abgewandten Seite eines wettergeschützten transparenten Wärmedämmelements ein Absorber angeordnet, der mit einem absorberseitigen Wärmeübertrager verbunden ist, der mit einem raumseitigen Wärmeübertrager und einem Speicher über mindestens eine innere Vorlaufleitung und eine innere Rücklaufleitung bzw. innere Kanäle derart verbunden ist, daß das Wärmeträgermedium passiv durch Schwerkraft im Kreislauf vom absorberseitigen Wärmeübertrager zum raumseitigen Wärmeübertrager, vom Absorber zum Speicher oder vom Speicher zum raumseitigen Wärmeübertrager bzw. umgekehrt führbar ist.

Hiervon ausgehend ist es Aufgabe der vorliegenden Erfindung, das bekannte Verfahren zur Heizung von Gebäuden mit einer transparenten Wärmedämmung auf der Gebäudefassade durch Ausnutzung der Solarstrahlung so zu verbessern, daß unter Berücksichtigung aller im Gebäude bestehenden Angebote und Bedarfe bezüglich einer Baueinheit wie Raum, Geschoß, Gebäudeteil, Gebäude und/ oder Gebäudegruppe eine Erfassung, Regelung und Versorgung so durchführbar ist, daß der Anteil der dem System zugeführten Energie als Fremdenergie wie fossile Brennstoffe, Strom, Fremdwärme od.dgl. minimiert wird.

Zur Lösung dieser Aufgabe wird ein Verfahren der eingangs genannten Art vorgeschlagen, bei dem erfindungsgemäß die im Patentanspruch 1 gekennzeichneten Maßnahmen vorgesehen sind.

Mit einem solchen Verfahren ist es möglich geworden, bedarfs- und angebotsabhängig unterschiedliche, auch unbesonnte Gebäudezonen zu beheizen und/oder zu kühlen, wobei eine zeitliche und räumliche Entkopplung von Wärmeangebot und Wärmeverbrauch erzielt wird.

Weiterhin soll zur Durchführung des Verfahrens eine Baueinheit als Fassadenelement geschaffen werden, die als Solarheizmodul bezeichnet wird und die zur Heizung und Kühlung einer Baueinheit einsetzbar ist und die es ermöglicht, im passiven Betrieb genau nach Bedarf geregelt die an das Solarheizmodul angrenzenden Räume zu heizen oder zu kühlen und im aktiven Betrieb auch die entfernt liegenderen Baueinheiten mit zu versorgen. Hierzu wird erfindungsgemäß ein Solarheizmodul vorgeschlagen, wie es im Anspruch 26 angegeben ist. Weiterhin wird erfindungsgemäß eine Anlage zur Durchführung des Verfahrens angegeben, mit der nach Bedarf über dasselbe Leitungsnetz zentrale Heiz- und Kühleinrichtungen so anschließbar sind, daß bei optimaler Nutzung des solaren Energieangebots und sonstiger zur Verfügung stehender Energieangebote eine flexible Anpassung an Witterungsbedingungen und Raumwärmebedingungen auf allen Seiten des Gebäudes und in allen Gebäudezonen ermöglicht wird, wie es im Anspruch 10 angegeben ist.

Nach der Erfindung sind solare Wärmeaufnehmereinheiten mit transparenter Wärmedämmung mit raumseitigen Wärmeabgebern kombiniert. Diese sind so ausgebildet, daß sie von Raumluft umspült werden. Die raumseitigen Wärmeabgeber können Wärmeübertrager in der Form von Radiatoren, Konvektoren oder Plattenheizkörpern oder aber auch in der Decke oder im Fußboden angeordnete Wärmeübertrager sein. Zur Wärmespeicherung ist der Einsatz von Speichern möglich.

Jedem Solarheizmodul ist ein Speicher zugeordnet, wobei die transparente Wärmedämmung, ein Absorber als Solar-Wärmeaufnehmer mit einem Wärmeübertrager, ein Speicher und ein raumseitiger Wärmeabgeber modulartig zu einem vorfertigbaren Solarheizmodul zusammengefaßt werden. Nach einer weiteren Ausbildung der Erfindung ist es aber auch möglich, den Speicher eines Solarheizmoduls auf der Fassade oder einem anderen Teil der Gebäudeaußenfläche anzuordnen, um den nachträglichen Einsatz von Solarheizmodulen zu ermöglichen. Die erfindungsgemäßen Besonderheiten der Anlage sind integrierbar in konventionellen Anlagen z.B. mit Wärmeträgermedien, Wärmeerzeugern, Kältemaschinen, Eisspeichern usw. In besonderen Fällen können die Speicher der Solarheizmodule auch in die Gebäudehülle wie z.B. in die Fassade integriert werden. Es kann auch ggf. zusätzlich ein zentraler Wärmespeicher vorgesehen werden, der z.B. isoliert an der Nordseite des Gebäudes angeordnet wird, sofern die baulichen Gegebenheiten dies gestatten. In die Anlage kann auch ein Kältespeicher wie z.B. ein Eisspeicher integriert werden. Hierdurch ist es möglich, durch eine entsprechende Anlagenschaltung eine raumseitige Kühlung vorzusehen. Es ist aber auch möglich, zur Kühlung ausschließlich eine Kältemaschine mit entsprechender Dimensionierung einzusetzen. In einer besonderen Ausgestaltung der Erfindung wird das die Absorber zumindest einzelner Solarheizmodule durchströmende Wärmeträgermedium dem Austreiber einer Absorptionskältemaschine zugeführt, deren Verdampfer mit großflächigen Wärmeübertragern in der Decke des Gebäudes verbunden werden kann, die hierdurch als Kühldecken wirken.

Durch entsprechende Schaltung der Anlagenteile in Verbindung mit einem zentralen Leitrechner ist es möglich, die Solarheizmodule einerseits im Inselbetrieb passiv ohne Pumpe oder Ventilator zu betreiben, andererseits aber an einer Seite der Gebäudeaußenfläche aufgewärmtes Wärmeträgermedium in die Gebäudezone eines anderen Teils der Gebäudeaußenfläche zu fördern oder aber mittels einer zentralen Heizanlage und einer zentralen Kühlanlage über besondere Wärmeübertrager geschoßweise eine evtl. erforderliche Aufheizung oder Kühlung des Wärmeträgermediums vorzunehmen. Das zentrale Heiz- bzw. Kühlsystem des Gebäudes kann hierbei mit den Solarheizmodulen im Verbund oder aber strömungstechnisch von diesen getrennt wirken.

Eine bevorzugte Ausgestaltung des Verfahrens besteht darin, daß bei einer positiven Temperaturdifferenz zwischen dem Sollwert und dem Istwert der Raumtemperatur sowie zwischen der Temperatur des Wärmeträgermediums im Absorber und der Raumtemperatur Wärmeträgermedium vom Absorber direkt durch mindestens einen in dem Raum befindlichen Wärmeübertrager geleitet wird, daß bei positiver Temperaturdifferenz zwischen der Temperatur des Wärmetragermediums im Absorber und der Medientemperatur im unteren Bereich des Speichers und negativer oder keiner Temperaturdifferenz zwischen dem Istwert und dem Sollwert der Raumtemperatur Wärmeträgermedium vom Absorber in den Speicher geleitet wird, und daß bei positiver Temperaturdifferenz zwischen dem Sollwert und dem Istwert der Raumtemperatur und zwischen der Medientemperatur im oberen Bereich des Speichers und der Raumtemperatur und negativer oder keiner Temperaturdifferenz zwischen der Medientemperatur im Absorber und der Medientemperatur im unteren Bereich des Speichers im Speicher befindliches Wärmeträgermedium durch den im Raum befindlichen Wärmeübertrager geleitet wird.

Nach einer vorteilhaften Ausgestaltung ist dabei vorgesehen, daß bei einer über eine vorbestimmte Zeit verbleibenden negativen Temperaturdifferenz zwischen der Raumtemperatur und dem Raumtemperatursollwert in einer Gebäudezone zunächst wärmeres Wärmeträgermedium aus anderen Gebäudezonen der einen Gebäudezone zugeführt und bei Aufrechterhaltung der negativen Temperaturdifferenz dann von einer zentralen Heizeinrichtung wie zentralem Wärmeübertrager, Speicher oder Wärmeerzeuger erwärmtes Wärmeträgermedium durch den raumseitigen Wärmeübertrager und/oder bei großer Wahrscheinlichkeit der Andauer dieses Zustandes in den raumseitigen Speicher strömt.

Die Erfindung wird nachstehend am Beispiel der in den Zeichnungen schematisch dargestellten erfindungsgemäßen Verfahren, Anlage und der Ausführungsformen von Solarheizmodulen näher erläutert. Es zeigen
- **Fig. 1a**: in einer rein schematischen senkrechten Schnittdarstellung die Einstrahlungs- und Abstrahlungszonen und Temperaturzonen in einem Gebäude,
- **Fig. 1b**: in einer horizontalen rein schematischen Schnittdarstellung das Gebäude gemäß Fig.14,
- **Fig. 2a bis 2c**: in rein schematischen Darstellungen die Energiebedarfe und Energieangebote in einem zu betrachtenden Systembereich mit den durchzuführenden Energieverschiebungen,
- **Fig. 3**: in rein schematischer Darstellung Informationswege und Energieaustauschwege der verschiedenen Wärmeangebote und -bedarfe,
- **Fig. 4**: in einer rein schematischen Darstellung die Hauptelemente einer Anlage für die Solarheizung,
- **Fig. 5**: in einer rein schematischen senkrechten Schnittdarstellung ein mit einer Anlage für eine Solarheizung mit Solarheizmodulen versehenes Gebäude,
- **Fig. 6**: in einer rein schematischen Darstellung die Wirkungsweise und die Energieflüsse in einem erfindungsgemäßen Solarheizmodul,
- **Fig. 7**: in einer schematischen Darstellung anhand einer senkrechten Schnittdarstellung eines erfindungsgemäßen Solarheizmoduls die möglichen Energiefluß- und Austauschwege im Heiz- bzw. im Kühlbetrieb,
- **Fig. 8**: in rein schematischer Darstellung ein in einem Gebäudewandteil angeordnetes Solarheizmodul in einer einfachen Ausführungsform in seinem senkrechten Schnitt,
- **Fig. 9**: in einer schematischen Darstellung ein sowohl für den dezentralen als auch für den zentralen Betrieb vorgesehenes Solarheizmodul in einer senkrechten Schnittdarstellung,
- **Fig.10 bis 13**: in seitlichen Schnittdarstellungen verschiedene Ausführungen von Solarheizmodulen in rein schematischen Ansichten,
- **Fig.14**: in einer seitlichen Schnittdarstellung eine weitere Ausführungsform eines Solarheizmoduls für die Verwendung von Luft als Wärmeträgermedium in einer rein schematischen Ansicht,
- **Fig.15, 16a und 16b**: in seitlichen Schnittdarstellungen verschiedene Ausführungen von Solarheizmodulen in rein schematischen Ansichten,
- **Fig. 17a bis 17 i**: schematisch die Darstellung von Betriebszuständen in Solarheizmodulen bei unterschiedlichen Ventilstellungen bzw. unterschiedlichen Stellungen eines Mehrwegeventiles,
- **Fig. 18 und 19**: ein Mehrwegeventil für ein Solarheizmodul in einer perspektivischen Ansicht und in einer Ansicht von unten im Schnitt,
- **Fig**. **20 und 21**: eine weitere Ausbildung eines Mehrwegeventils in einer Ansicht von unten und in einer Seitenansicht im Schnitt,
- **Fig. 22a bis 22c**: eine weitere Ausbildung eines Mehrwegeventils in einer Ansicht von unten und in einer Seitenansicht im Schnitt,
- **Fig. 23**: eine Anlage für eine Solarheizung mit Solarheizmodulen in einer schematischen Darstellung im Gebäudequerschnitt,
- **Fig. 24a bis 24d**: die Anordnung von Solarheizmodulen in einer Fassade im Ausschnitt,
- **Fig. 25 und 26**: in schematischen Darstellungen geschoßweise Anlagenschaltungen für eine Solarheizung.

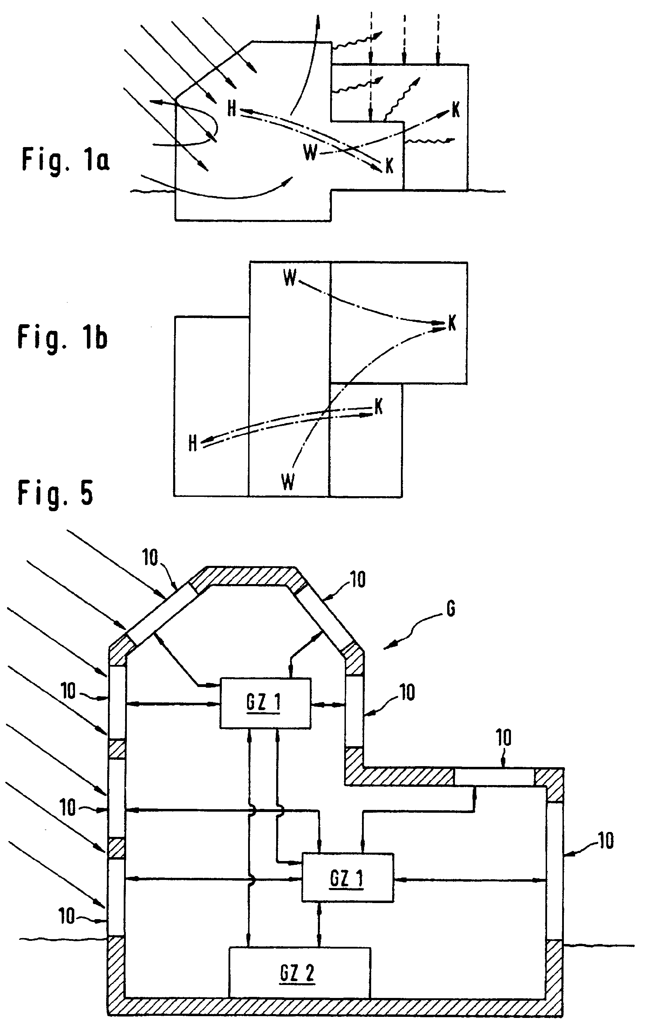

Um die dem erfindungsgemäßen Verfahren zugrundeliegenden Überlegungen darzustellen, ist in Fig.1a und 1b eine Gebäudegruppe in einem rein schematischen Vertikalschnitt (Fig.1a) und in einem Horizontalschnitt (Fig.1b) dargestellt. Wie durch die verschiedenen Pfeile angedeutet ist, wird ein Gebäude durch die Umgebung verschiedensten Einflüssen ausgesetzt bzw. es steht in entsprechenden Wechselwirkungen seiner Umgebung. So ergeben sich unter dem Einfluß einer Solarbestrahlung, unabhängig von der Verwendung von Solarheizmodulen, Solarheizungen u.dgl. heiße Zonen H, warme Zonen W und kalte Zonen K, da einerseits durch die Sonneneinstrahlung durch die Fenster die Gebäudeinnenräume und durch die Bestrahlung der Gebäudeflächen die Gebäudehülle mehr oder minder stark erwärmt wird, während bei einem Temperaturniveau im Gebäude, das über dem Niveau der Umgebung liegt, auch gleichzeitig eine Energieabstrahlung erfolgt. Wie durch die gestrichelten Pfeile angedeutet, ist auch noch die zusätzliche Energieentnahme durch Regen oder Schnee zu berücksichtigen, da durch auftreffenden Regen und Schnee Wärme, insbesondere Auftau- und Verdunstungswärme entzogen werden.

Ausgehend von diesen an sich bekannten Überlegungen, daß sich in einer Gebäudegruppe sowohl bei einer Gesamtbetrachtung als auch bei einer geschossweisen Betrachtung unterschiedliche vorgegebene Temperaturbereiche ergeben, ist es Sinn eines optimalen Verfahrens zum Heizen oder Kühlen eines Gebäudes, die zur Verfügung stehenden Energien, d.h. also die zur Verfügung stehenden Angebote zu erfassen und so zwischen den Gebäudeabschnitten ausgleichend hin- und herzuführen, daß der Anteil der dem System von außen zuzuführenden Energie möglichst gering bleibt und daß insbesondere unter Verwendung der zur Verfügung stehenden Solarenergie eine Temperierung jedes einzelnen Gebäudeabschnitts, d.h. Raumes, jedes Geschosses und des Gesamtgebäudes so erfolgt, daß unter Ausgleich aller Wärmeangebote und Wärmebedarfe von der Gebäudezentrale nur ein Minimum an zusätzlicher Energie zur Verfügung gestellt wird. Die ist durch die strichpunktierten Pfeile angedeutet.

In Fig.5 ist schematisch der Querschnitt durch ein Gebäude G dargestellt, in dessen Außenhülle Solarheizmodule als Baueinheiten angeordnet sind. Dabei können je nach Anforderungen der einzelnen Gebäudeteile die verschiedensten Ausführungsformen der Solarheizmodule Anwendung finden, wie sie beispielhaft voranstehend beschrieben worden sind. Der Energietransport zwischen den einzelnen Solarheizmodulen 10, deren Steuerung und ggf. deren (zusätzliche) Energieversorgung wird zunächst jeweils über eine Zonen- bzw. Geschosszentrale GZ1 und übergeordnet über eine Gebäudezentrale GZ2 durchgeführt, die mit entsprechenden Fremdenergiequellen wie beispielsweise einem Brenner oder einem anderen Wärmeerzeuger, einer zentralen Kühleinrichtung und auch einem Zentralspeicher (alle Elemente in der Zeichnung nicht dargestellt) verbunden ist.

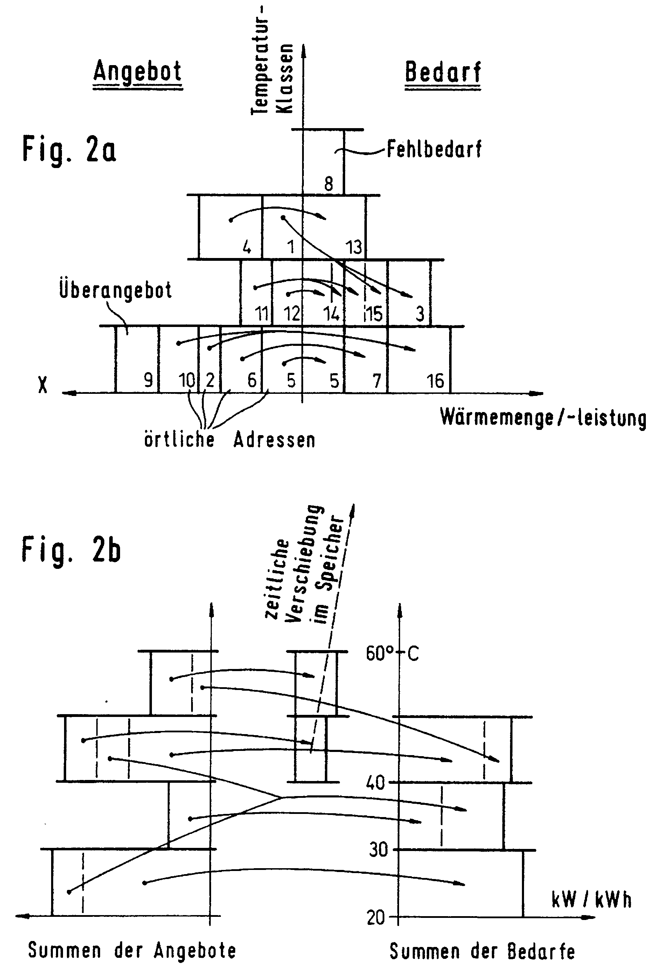

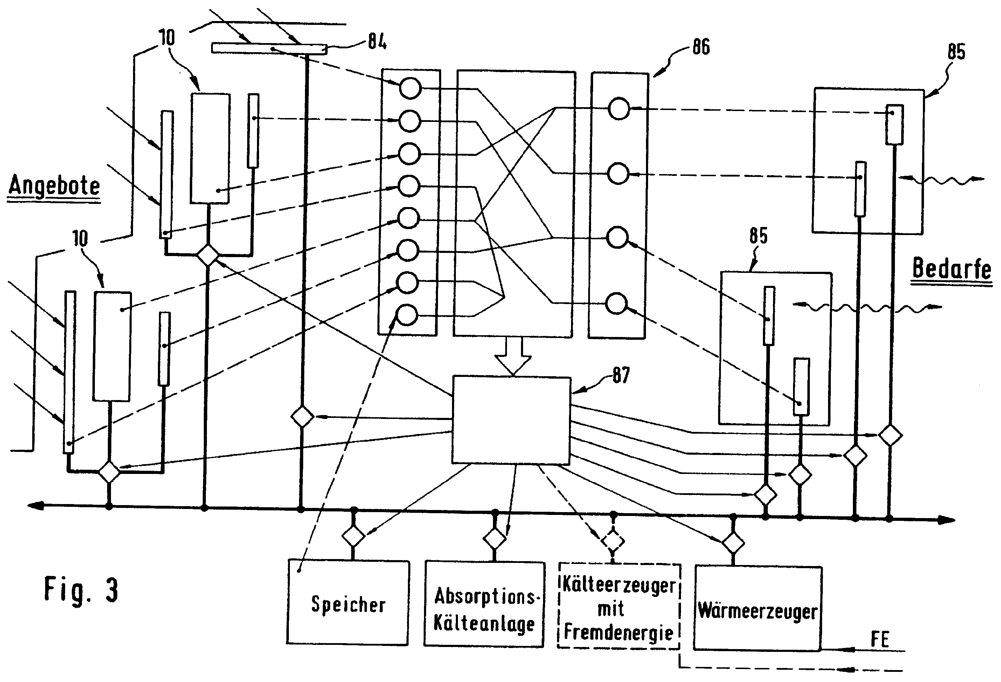

In den Fig. 2a bis 2c ist dies näher verdeutlicht, da hier schematisch einmal für die örtlichen Adressen, d.h. für die verschiedenen Gebäudepunkte die Bedarfe und Angebote nach Qualität und Quantität differenziert und in ihrer zeitlichen Verschiebung dargestellt sind. So zeigt sich in Fig. 2a, daß in dem untersten Temperaturniveau ein überangebot besteht, während auf dem höchsten Temperaturniveau ein Fehlbedarf auftritt. Dieser Fehlbedarf ist durch Fremdenergie FE (Fig.3) auszugleichen, wobei sinnvollerweise das Wärmeträgermedium, das bereits ein Energieangebot (9 im Diagramm) mit sich führt, für die Temperaturerhöhung herangezogen wird, da hier die zuzuführende Energiemenge minimierbar ist. Dies kann z.B. auch mit einer Wärmepumpe geschehen.

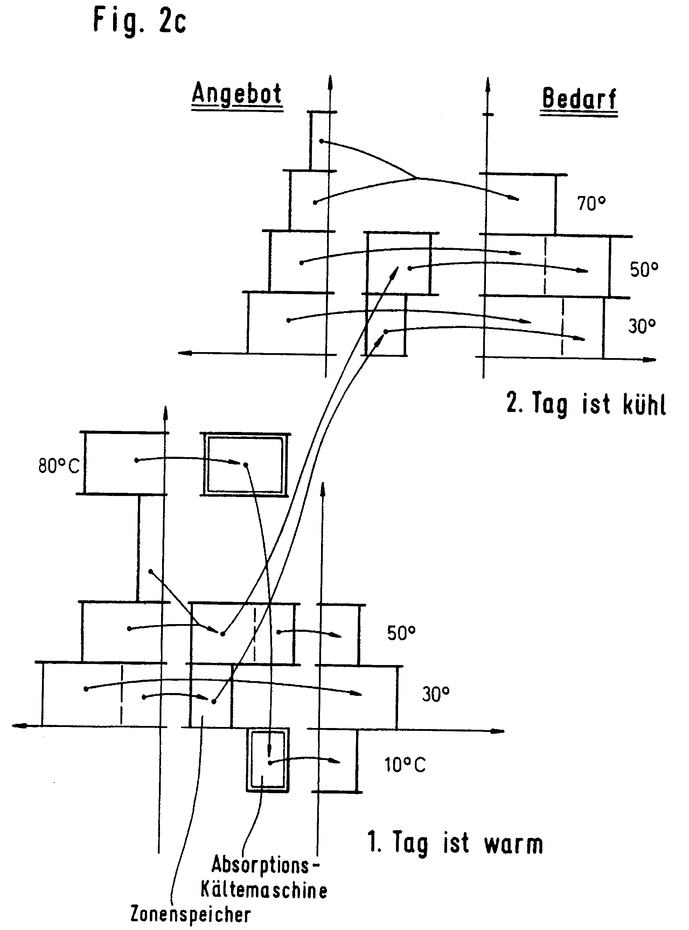

Wie in Fig. 2b dargestellt ist, ergeben sich nicht nur unterschiedliche Quantitäten und Qualitäten, sondern es ergeben sich auch zeitlich verschoben große Unterschiede auf der Angebots- und Bedarfsseite, die auszugleichen sind. Dies kann über kürzere zeitliche Distanzen, beispielsweise im Stundenrhythmus, betrachtet werden, jedoch sind auch längerfristige Betrachtungen für die Regelung und Steuerung heranzuziehen, wie dies in Fig. 2c dargestellt ist.

Als Beispiel für ein solches Regelungssystem ist das Schema in Fig. 3 anzusehen, in dem Solarmodule 10 und ein zusätzlicher raumseitiger Wärmeübertrager 84 auf der Angebotsseite sowie Module 85 auf der Bedarfsseite angeordnet sind, die über in der Zeichnung gestrichelt dargestellte Meßwertübertragungsleitungen so mit einer Meßwerterfassungs- und Auswerteeinheit 86 verbunden sind, daß die Energieangebote und die ebenfalls erfaßten und ausgewerteten Energiebedarfe einer Zentralrechnereinheit 87 zuführbar sind, die die in der Zeichnung durch Rauten angedeutete Steuerorgane in den Leitungen für das Wärmeträgermedium steuert und gleichzeitig die Zuführung von Fremdenergie FE, die Energiespeicherung in Zwischenspeichern und die Energieabfuhr über Absorptionskälteeinrichtungen vornimmt.

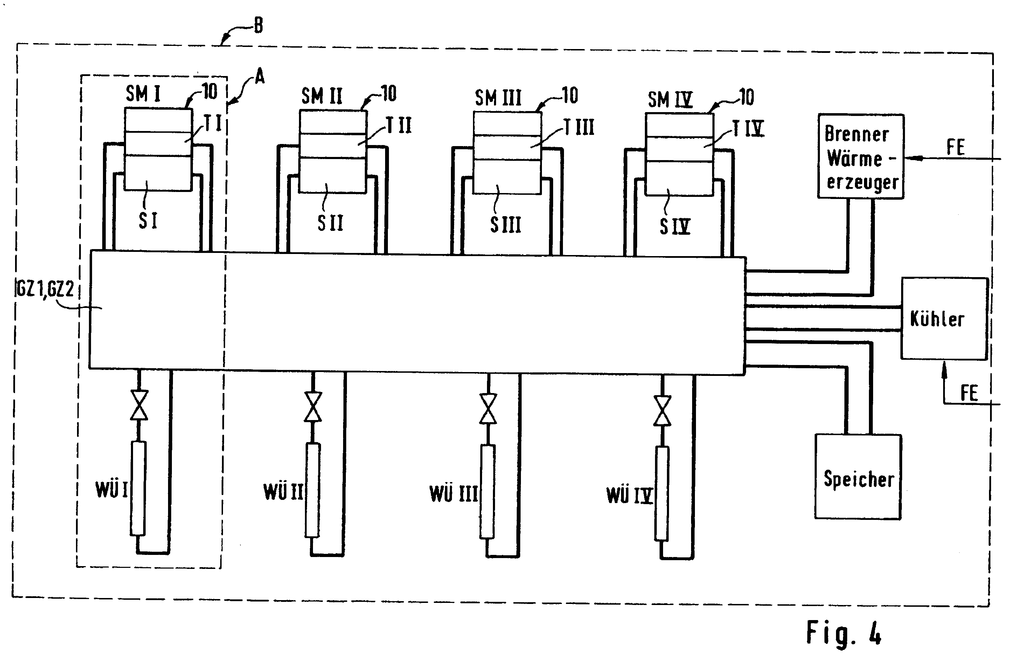

Anhand von Fig. 4 ist einmal schematisch die Regelung und Steuerung innerhalb des Gebäudes dargestellt. Es erfolgt einerseits eine Regelung und Steuerung so, daß in jedem Einzelsystemkreis A, d. h. in jedem von einem Solarmodul 10 SM I gebildeten System ein Energietransport zwischen dem absorberseitigen Wärmetauscher T I, dem Speicher S I und dem Wärmeübertrager WÜ I so erfolgt, daß eine optimale Raumbeheizung oder Kühlung möglich ist. Zur Vermeidung der Notwendigkeit von zusätzlichen Energieflüssen ist dabei ein Energiefluß nach dem Schwerkraftsystem vorgesehen, es kann jedoch zur Vermeidung großer Leitungsquerschnitte oder aufgrund anderer Gegebenheiten auch ein aktiver Kreis unter Verwendung einer steuerbaren Pumpe vorgesehen sein.

Weiterhin erfolgt die Steuerung und Regelung über die Geschosszentralen GZ1 und die Gebäudezentralen GZ2 so, daß auch innerhalb des Gesamtsystems B jedes Solarmodul SM I - SM IV bzw. die absorberseitigen Wärmetauscher T I - T IV, die Speicher S I - S IV und die raumseitigen Wärmeübertrager WÜ I - WÜ IV untereinander so verbindbar sind, daß die Energieflüsse zwischen den einzelnen Elementen optimal durchführbar sind, und zwar so, daß ein Ausgleich unter Berücksichtigung sowohl der nach Quantität als auch nach Qualität unterschiedlichen Bedarfe als auch der nach Quantität und Qualität unterschiedlichen Angebote durchführbar ist.

Wenn das Verfahren zur Regelung und Steuerung in einem Gebäudekomplex angewendet wird, ist zu beachten, daß eine Vielzahl von Wärmequellen als Lieferanten der zu verwendenden Energie zu erfassen sind. Hierbei ergeben folgende bevorzugte Zuordnungen zwischen den verschiedenen Wärmequellen und den verwendbaren Sensoren:
- Wärmequellen:: zugehörige Sensoren:
- Sonnenstrahlung: Pyranometer oder Photovoltaik-Zelle
- Außenluft: Widerstandsthermometer
- Abluft: Widerstandsthermometer, Volumenstrom
- Abwasser: Widerstandsthermometer, Volumenstrom
- Beleuchtung: Stromzähler
- elektr.Geräte: Stromzähler

Personenabwärme,-anzahl IR-Sensor, Lichtschranken zu entladender Speicher Widerstandsthermometer.

Auch bei den zu erfassenden Wärmesenken, die ja insbesondere für eine Berechnung zu erwartender Bedarfe zu berücksichtigen sind, ergibt sich folgende Zuordnung:
- Wärmesenken:: zugehörige Sensoren:
- Transmission: Widerstandsthermometer, Wärmestrom
- Lüftung: Widerstandsthermometer, Volumenstrom
- Abstrahlung: IR-Sensoren
- zu ladender Speicher: Widerstandsthermometer.

Dabei führt das erfindungsgemäße Verfahren schon zu optimalen Ergebnissen, wenn nur die jeweils wesentlichen Größen erfaßt werden, da der hauptsächliche Gewinn in der optimalen Nutzung der kostenlosen Solarenergie und der optimalen Verteilung der vorhandenen Energie besteht. Hierzu bietet das Solarheizmodul eine einfache und ebenso effektive Baueinheit an, mit der das Verfahren leicht verwirklicht und eine entsprechende Anlage ohne allzu großen Aufwand erstellt werden kann.

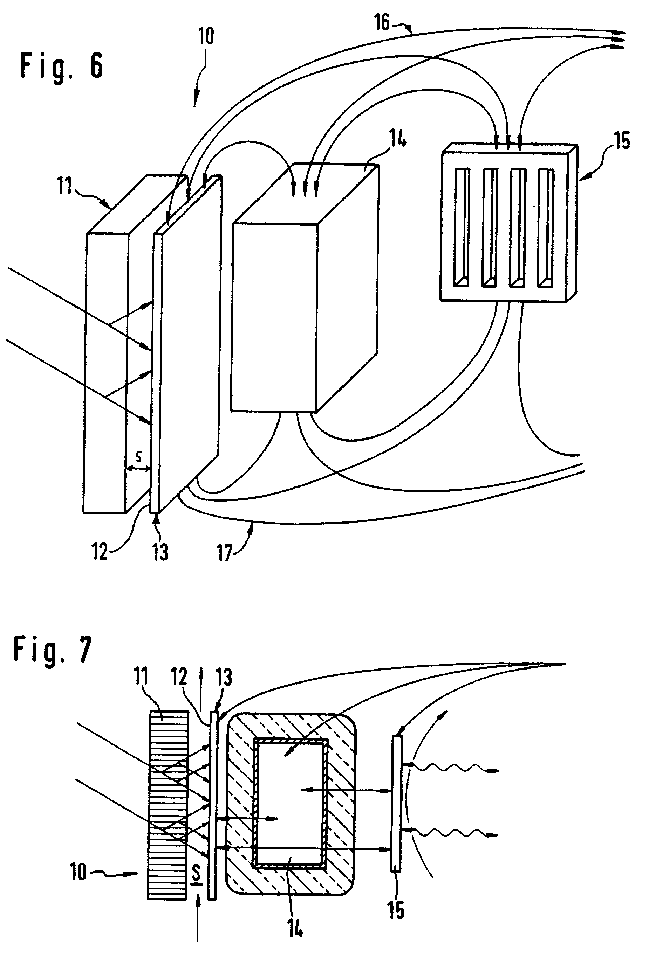

In Fig. 6 bis 9 sind der grundsätzliche Ausbau und verschiedene Ausführungsbeispiele eines Solarmodul 10 dargestellt.

Wie sich aus den Prinzipdarstellungen Fig. 6 und 7 ergibt, ist außenseitig, d.h. der Gebäudeumgebung zurichtbar, die transparente Wärmedämmung in Form eines Wärmedämmelementes 11 angeordnet. In einem eine Luftzirkulation erlaubenden Abstand S ist der Absorber 12 angeordnet, der sich an einem Wärmeübertrager 13 befindet, der von einem Wärmeträgermedium wie Wasser oder Luft durchströmt ist. Mit dem Wärmeübertrager 13 verbindbar ist der durch eine entsprechende Wärmedämmung abgedeckte und geschützte Wärmespeicher 14 angeordnet, der wiederum mit einem raumseitigen Wärmeübertrager verbindbar ist. Das Gesamtsystem des Solarheizmoduls 10, der auch als Kühlmodul verwendbar ist, wenngleich nachstehend zur Vereinfachung immer nur der Begriff Solarheizmodul verwendet wird, ist über Leitungen 16 und 17 so verbunden, daß eine Verbindung und die Ausbildung geschlossener Ringleitungen zwischen den einzelnen Elementen möglich ist und gleichzeitig und alternativ der Anschluß an ein zentrales Heizungs-/Kühlungssystem möglich ist.

Wie man dabei aus der Prinzipdarstellung gemäß Fig. 7 erkennt ist vorgesehen, daß die Solarstrahlung, die als gerichtetes oder diffuses Licht durch das Wärmedämmelement 11 durchtritt, auf den Absorber 12 auftrifft, wo sie in Wärmeenergie umgewandelt einem Wärmeträgermedium zugeführt wird. Von hier aus kann die Wärmeenergie direkt zu dem raumseitigen Wärmeübertrager 15 oder zunächst in den Speicher 14 und von dort zum raumseitigen Wärmeübertrager 15 transportiert werden, wo sie im Wege von Wärmekonvektion und Wärmestrahlung an den Raum abgegeben wird. Gleichzeitig ist es möglich, die im Absorber gewonnene und im Wärmeübertrager dem Wärmeträgermedium zugeführte Wärmeenergie über eine entsprechende Transportleitung dem Zentralsystem zuzuführen.

Das gleiche System läßt sich aber auch als Kühlmodul verwenden, in dem vom raumseitigen Wärmeübertrager, der in diesem Fall als Kühlfläche dient, Wärme aufgenommen wird. Diese Wärmeenergie kann zunächst dem Speicher oder direkt dem mit dem Absorber verbundenen Wärmeübertrager zugeführt werden, von wo sie durch die durch den Spalt S zwischen dem Absorber 12 und dem Wärmedämmelement 11 hindurchgeführte Außenluft im Wege der Wärmekonvektion abgegeben wird. Gleichzeitig ist es natürlich möglich, an irgendeiner anderen Stelle des Systems aufgenommene Wärme entweder zur Abstrahlung dem raumseitigen Wärmeübertrager 15 oder zur Speicherung dem Speicher 14 oder zur Abgabe dem Wärmeübertrager 13 zur Übertragung an die Außenluft zuzuführen. Bei der Verwendung des Fassadenelementes als Kühlmodul ist eine gezielte Führung der Luft zwischen dem Wärmedämmelement 11 und dem Absorber 12 vorteilhaft, auf die später noch eingegangen wird. Auch kann in diesem Fall das Modul anstelle des transparenten Wärmedämmelementes mit einem opaken Wärmedämmelement versehen sein, was allerdings mit dem Nachteil verbunden ist, daß dann das Modul nicht als Solarmodul einsetzbar ist.

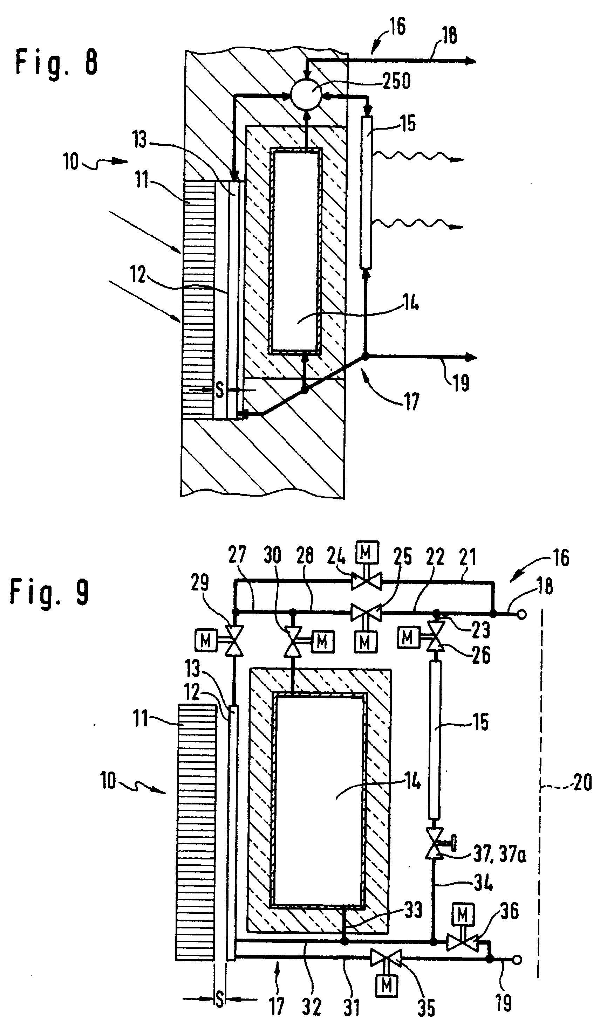

Wie in Fig. 8 prinzipiell dargestellt ist, ist die Funktion des Solarheizmodul 10 im wesentlichen so ausgebildet, daß das Wärmeträgermedium passiv durch Schwerkraft vom absorberseitigen Wärmeübertrager 13 zum Speicher 14 oder zum raumseitigen Wärmeübertrager 15 oder vom absorberseitigen Wärmeübertrager direkt zum raumseitigen Wärmeübertrager 15 oder zum Leitungssystem eines zentralen Verteilungs- und Regelungssystems strömt. Dabei ist vorteilhafterweise vorgesehen, daß in dem Solarheizmodul 10 der Speicher 14 zwischen dem absorberseitigen Wärmeübertrager 13 und dem raumseitigen Wärmeübertrager 15 angeordnet ist, wobei anstelle eines das Wärmeträgermedium speichernden Speichers 14 auch ein Teil der Gebäudehülle als Speicher ausgebildet sein kann, was in der Zeichnung nicht dargestellt ist.

Um die vielseitige Verwendbarkeit des Solarmoduls sicherzustellen, kann vorgesehen werden, daß der Speicher 14 zusätzlich mit einem Speichermedium versehen wird, das in der Zeichnung nicht gesondert dargestellt ist, und daß beispielsweise aus einem besonders geeigneten hydraulischen Medium oder aus Festkörpern und/oder chemischen Stoffen bestehen.

Um die zur Durchführung des Verfahrens notwendigen Energietransporte durchzuführen und die vorgesehenen Wärmeträgermediumdurchflußkreise zu realisieren, ist das Solarmodul 10 über die äußere Vorlaufleitung 18 und über die äußere Rücklaufleitung 19 an ein in Fig. 9 nur angedeutetes Zentralsystem 20 anschließbar. Die äußere Vorlaufleitung 18 ist über die Vorlaufanschlußleitung 21 direkt mit dem absorberseitigen Wärmeübertrager 13 über die Vorlaufanschlußleitung 22 mit dem Speicher 14 und über die Vorlaufanschlußleitung 23 mit dem raumseitigen Wärmeübertrager 15 verbunden, wobei in jeder der Vorlaufanschlußleitungen 21,22,23 Absperr- und Regelarmaturen 24,25,26 angeordnet sind. Weiterhin sind Verbindungsleitungen 27,28 und weitere Absperr- und Regelarmaturen 29,30 vorgesehen, um die drei Hauptelemente des Solarmoduls 10, nämlich den absorberseitigen Wärmeübertrager 13, den Speicher 14 und den raumseitigen Wärmeübertrager 15 in die verschiedenen Flußkreise einzuschalten bzw. aus diesen herauszuschalten. In entsprechender Weise sind Rücklaufleitungen 31,32,33,34 vorgesehen und mit entsprechenden Absperr- und Regelarmaturen 35,36,37 versehen, um die erforderlichen heiz- und kühltechnischen Flußkreise und Betriebszustände zu verwirklichen. Die einzelnen Absperr- und Regelelemente 24,25,26,35,36,37 sind dabei als motorisch betätigte, ansteuerbare Ventileinrichtungen ausgebildet, wobei im Bereich des raumseitigen Wärmeübertragers 15 auch ein handbetätigbares Stellventil 37a Anwendung finden kann, um einen direkten Eingriff in das Regelsystem zu ermöglichen. Hierbei kann es sich auch um einen Sollwertsteller oder ein Thermostatventil handeln.

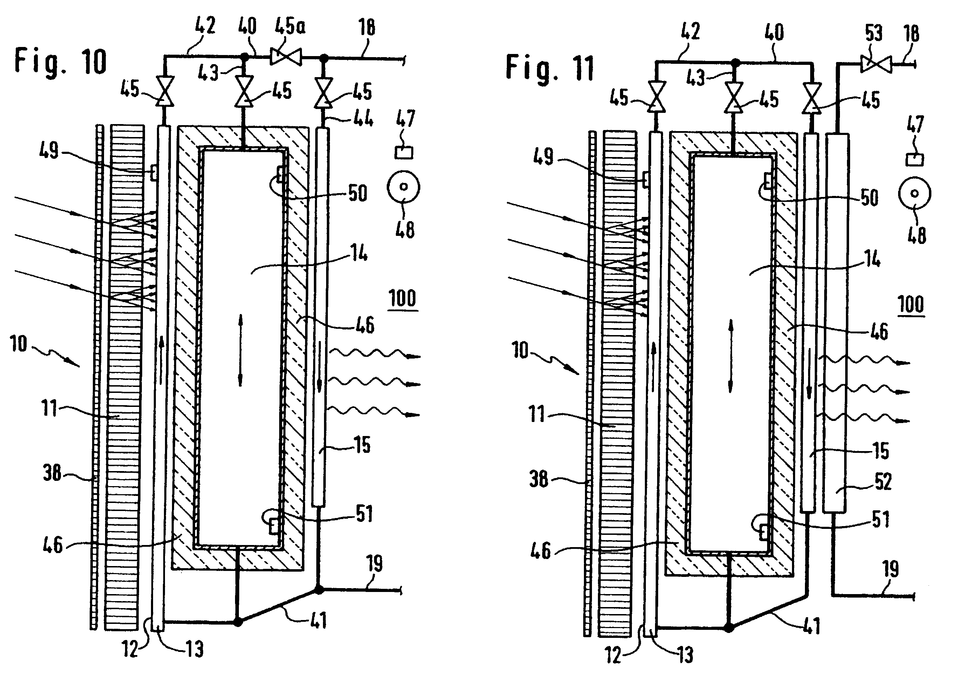

Im folgenden werden die Solarheizmodule 10 näher erläutert, deren verschiedene Ausgestaltungen in den Fig. 10 bis 16b dargestellt sind.

In Fig. 10 ist das Solarheizmodul 10 im prinzipiellen Aufbau mit seinen Funktionen gezeigt. Außenseitig in der Fassade ist das transparente Wärmedämmelement 11 angeordnet, das gegen Staub und Kondenswasser mit einer transparenten Wetterschutzabdeckung 38 geschützt ist. Durch das transparente Wärmedämmelement 11 wird gerichtete und diffuse Sonnenstrahlung auf den im Abstand S hinter dem transparenten Wärmedämmelement 11 befindlichen Absorber 12 gelenkt. Der mit dem Absorber 12 verbundene Wärmeübertrager 13 kann für verschiedene Wärmeträgermedien wie Wasser und Luft ausgebildet sein. In Anpassung an das Wärmeträgermedium ist der Speicher 14 ausgebildet, der von einer Wärmedämmschicht 46 umgegen ist. Der Speicher 14 kann sowohl im Schwerkraftbetrieb wie auch im Betrieb mit Pumpen oder Ventilatoren geladen und entladen werden. Der zum Raum 100 gerichtete raumseitige Wärmeübertrager 15 kann als üblicher Warmwasserheizkörper oder aber auch als Lufthypokaustenwand ausgebildet sein. Der Absorber 12 bildet die solare Wärmeaufnehmereinheit des Solarheizmoduls 10, während der raumseitige Wärmeübertrager 15 den Raum-Wärmeabgeber darstellt. Die wärmeträgermediumführenden Bauteile, nämlich der Wärmeübertrager 13, Speicher 14 und raumseitige Wärmeübertrager 15 sind am oberen und unteren Endabschnitt mit der inneren Vorlaufleitung 40 und inneren Rücklaufleitung 41 so verbunden, daß nur geringe Strömungswiderstände entstehen und somit eine Wärmeübertragung im Schwerkraftbetrieb möglich ist. In den Vorlaufanschlußleitungen 42,43,44 des Wärmeübertragers 13, Speichers 14 und raumseitigen Wärmeübertragers 15 sind Absperr- und Regelarmaturen 45,45a angeordnet, mittels derer die erforderlichen heiz- und kühltechnischen Betriebszustände sowohl passiv im Solarheizmodul 10 selbst wie auch aktiv im Zusammenwirken mit weiteren Einrichtungen im Gebäude gesteuert werden können. Durch die Wärmedämmung 46 wird ein unkontrollierter Wärmeübergang im Solarheizmodul 10 verhindert. Darüber hinaus dient diese Wärmedämmung 46 der Wärmedämmung des gesamten Fassadenbauteils auch bei Stillstand des Betriebes und somit zu einem Wärmeschutz des Gebäudes. Die Verbindung zu weiteren Solarheizmodulen 10 und/oder zentralen Einrichtungen zur Heiz- und Kühlmittelversorgung des Gebäudes erfolgt über die äußere Vorlaufleitung 18 bzw. äußere Rücklaufleitung 19.

Zur Regelung des Solarheizmoduls 10 sind an diesem Temperatursensoren vorgesehen, die mit einem Raumtemperatursensor 47 und einem Raumtemperatursollwertversteller 48 zusammenwirken. An dem Absorber 13 ist ein Temperatursensor 49 vorgesehen. Im Speicher 14 befindet sich am oberen Endabschnitt ein Temperatursensor 50 und am unteren Endabschnitt ein Temperatursensor 51, so daß meßtechnisch die Warmseite und Kaltseite des Speichers 14 erfaßt wird.

Es ist auch möglich, das Solarheizmodul 10 ausschließlich für einen Schwerkraftbetrieb vorzusehen und für die Einwirkung einer zentralen Heizanlage und/oder Kühlanlage einen Zusatzwärmeübertrager 52 vorzusehen, der vor dem raumseitigen Wärmeübertrager 15 angeordnet ist (Fig.11). Dieser Zusatzwärmetauscher 52 kann z.B. als Röhrenradiator ausgebildet sein, wodurch Wärmestrahlung des raumseitigen Wärmeübertragers 15 durch die Zwischenräume der Röhren in den Raum 100 gelangen kann. Der Zusatzwärmeübertrager 52 ist mit der äußeren Vorlaufleitung 18 und der äußeren Rücklaufleitung 19 verbunden. Zur Regelung des Zusatzwärmeübertragers 52 dient eine Absperr- und Regelarmatur 53, die in der äußeren Vorlaufleitung 24 angeordnet ist. Es ist auch möglich, einen Zusatzwärmeübertrager 52 vor dem raumseitigen Wärmeübertrager 15 eines Solarheizmoduls 10 nach Fig. 5 vorzusehen. Dieser wäre dann an eine Vorlaufverteilleitung und eine Rücklaufsammelleitung anzuschließen.

Die in den Fig. 10 und 11 dargestellen Solarheizmodule 10 sind besonders geeignet, als Fertigbauteil vorgefertigt und zur Verkleidung einer Fassade in die tragende Konstruktion eines Gebäudes eingebaut zu werden. Diese Solarheizmodule 10 enthalten in kompakter Form bereits alle erforderlichen Einzelelemente, wobei ggf. lediglich das Speichermedium für den Speicher 14 aus Gründen der Montagevereinfachung erst nach Einbau des Solarheizmoduls 10 in das Gebäude in den Speicher 14 eingeführt wird. Das Speichermedium kann hierbei aus Feststoff oder Wasser bestehen.

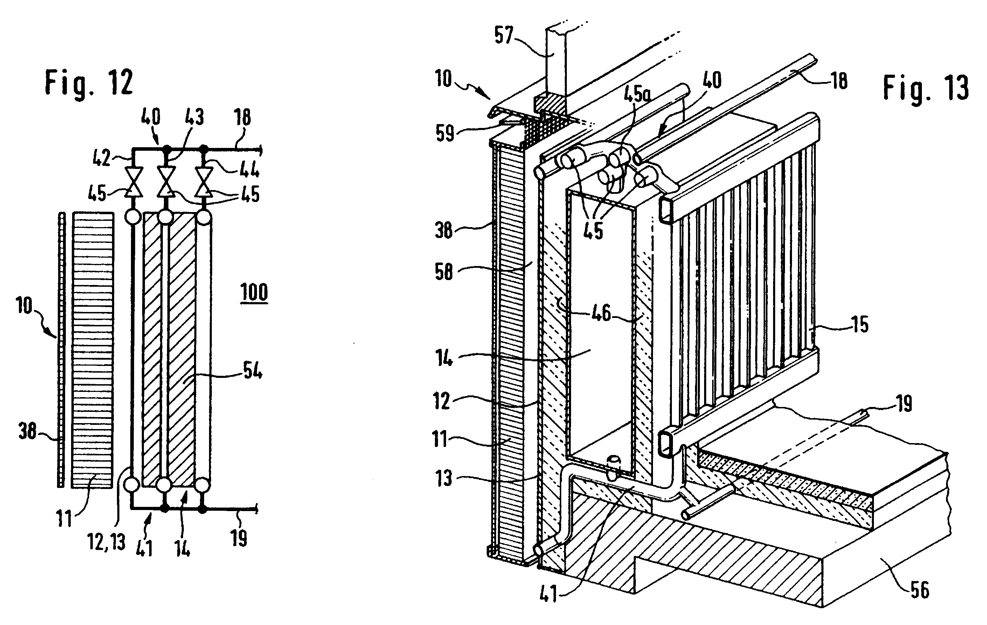

In Fig. 12 ist ein Solarheizmodul 10 dargestellt, bei dem der zwischen dem Absorber 12 mit dem Wärmeübertrager 13 und dem raumseitigen Wärmeübertrager 15 befindliche Abschnitt 54 der Gebäudehülle als Speicher 14 ausgebildet ist. Hierzu sind Rohrleitungen in diesen Abschnitt 54 der Gebäudehülle integriert und mit der inneren Vorlaufleitung 40 bzw. inneren Rücklaufleitung 41 verbunden.

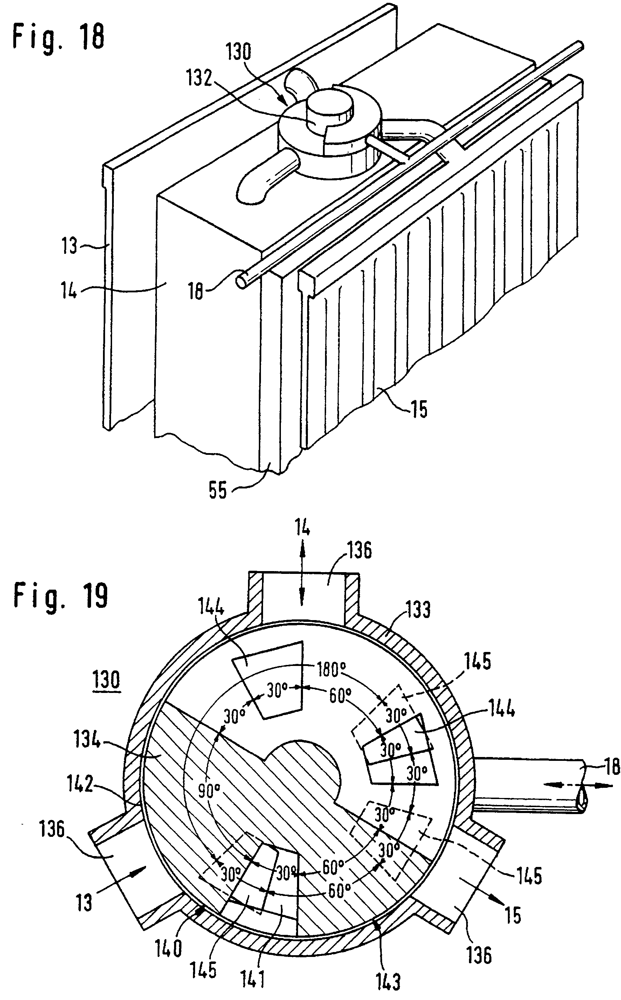

Die Durchflußmenge im Speicher 14 kann mittels einer Absperr- und Regelarmatur 45 wie Ventil od.dgl. eingestellt werden. An der Außenfläche des transparenten Wärmedämmelements 11 ist ebenfalls eine lichtdurchlässige Wetterschutzabdeckung 38 vorgesehen, um ein Eindringen von Feuchtigkeit und Schmutzteilchen in das transparente Wärmedämmelement 11 zu verhindern. Der Absorber 12 mit dem Wärmeübertrager 13 und der raumseitige Wärmeübertrager 15 sind mittels weiterer Absperr- und Regelarmaturen 45 mit der inneren Vorlaufleitung 40 verbunden, die an eine äußere Vorlaufleitung 18 angeschlossen ist. Die innere Rücklaufleitung 41 ist ebenfalls mit einer äußeren Rücklaufleitung 19 verbunden. Eine derartige Ausbildung eines Solarheizmoduls 10 eignet sich insbesondere dann, wenn bei der Herstellung des Baukörpers die für die Ausbildung des Speichers 14 erforderlichen Rohrleitungen bereits in den Baukörper integriert werden. Es ist auch bei diesem Solarheizmodul möglich, zwischen dem Absorber 12 und dem Abschnitt 54 der Gebäudehülle eine Wärmedämmschicht vorzusehen. Es kann auch ergänzend zusätzlich zur äußeren Wärmedämmschicht auf der innenraumseitigen Wand des Abschnitts 54 der Gebäudehülle eine weitere Wärmedämmschicht 55 vorgesehen werden, die zwischen dem Abschnitt 54 der Gebäudehülle und dem raumseitigen Wärmeübertrager 15 angeordnet wird (Fig.18).

In Fig. 13 ist in einer perspektivischen Ansicht ein Solarheizmodul 10 dargestellt, das auf einer Geschossdecke 56 angeordnet ist und mit einem flüssigen Wärmeträgermedium wie Wasser betrieben wird. Das Solarheizmodul 10 ist unter einem Fenster 57 bzw. einer Fensterbank angeordnet und in Brüstungsbauart ausgebildet. Bei diesem Solarheizelement 10 ist ebenfalls zwischen dem transparenten Wärmedämmelement 11 und dem Absorber 12 ein kanalartiger Hohlraum 58 ausgebildet. Am oberen Endabschnitt dieses Hohlraums 58 ist eine Luftaustrittsöffnung vorgesehen, die mittels einer Klappe 59 verschließbar ist. Bei geöffneter Klappe 59 ist eine Kühlung des Absorbers 12 durch die in dem kanalartigen Hohlraum 58 von unten nach oben durch Konvektion strömende Luft möglich. Hierdurch kann eine Überheizung des Absorbers 12 verhindert werden, wenn von diesem durch Sonnenlicht aufgenommene Wärme über den zugehörigen raumseitigen Wärmeübertrager 15 nicht an das Gebäude weitergegeben werden kann bzw. ein weiterer Speicher aufgeladen ist.

Der Speicher 14, der z.B. einen Blechmantel aufweisen kann, ist allseits mit einer Wärmedämmschicht 46 umgeben. Als raumseitiger Wärmeübertrager 15 ist ein Röhrenradiator dargestellt. Es kann aber auch ein Plattenheizkörper oder ein anderer großflächiger Wärmeübertrager verwendet werden, sofern dessen Querschnitt ausreichend groß für einen Schwerkraftbetrieb von Wasser ist. Zur Unterstützung des Schwerkraftbetriebes sind die innere Vorlaufleitung 40, innere Rücklaufleitung 41 sowie die Vorlaufanschlußleitungen und Rücklaufanschlußleitungen des Wärmetauschers 13, Speichers 14 und Wärmeübertragers 15 im Querschnitt großflächig dimensioniert. Mittels der Absperr- und Regelarmaturen 45 sind unterschiedliche Betriebsarten der passiven Solarnutzung möglich. Zum Entleeren des Speichers 14 bzw. Entlüften des Solarheizmoduls 10 sind die Anschlüsse an die äußere Vorlaufleitung 18 bzw. äußere Rücklaufleitung 19 möglichst hoch bzw. möglichst tief angeordnet. Bei Pumpenbetrieb im gesamten Gebäude werden die einzelnen Solarheizmodule 10 über die äußere Vorlaufleitung 18 und äußere Rücklaufleitung 19 miteinander verbunden. Bei geschlossener Absperr- und Regelarmatur 45a kann in diesem Fall getrennt vom Pumpenheizbetrieb von dem Absorber 12 aufgenommene Solarwärme durch Schwerkraft in den Speicher 14 geführt werden. Zur Vereinfachung der Wartung des Solarheizmoduls 10 ist es zweckmäßig, die Regel- und Absperrarmaturen 45,45a von außen gut zugänglich unter der Fensterbank anzuordnen.

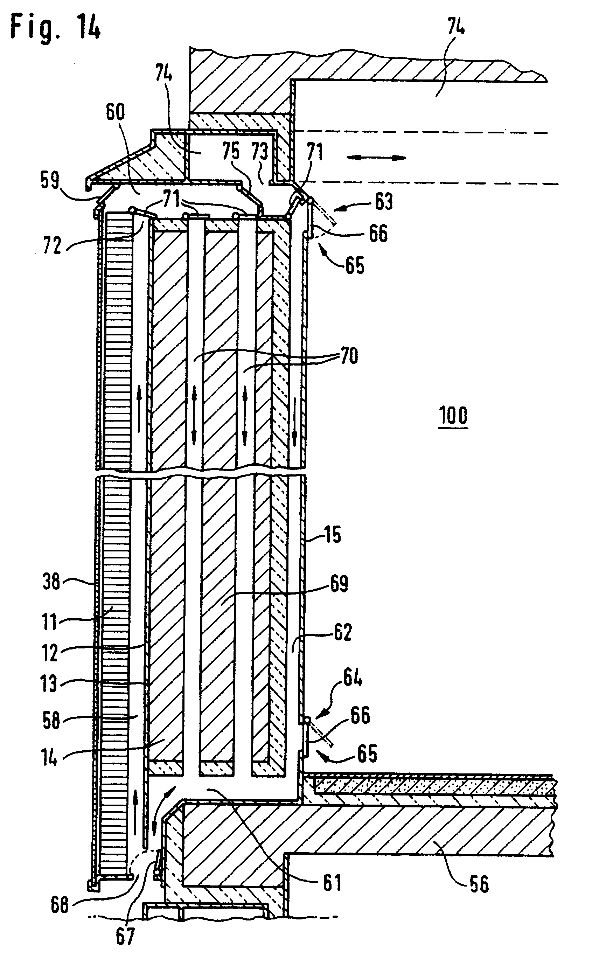

Fig. 14 zeigt ein Solarheizmodul 10, das raumhoch ausgebildet ist und von Luft betrieben wird. Bei diesem Solarheizmodul 10 kann der Speicher 14 eine mineralische Speichermasse aufweisen, die als tragende Baukonstruktion ausgebildet sein kann, mindestens aber sich selbst zwischen den Pfeilern tragend. Bei diesem Solarheizmodul 10 ist der kanalartige Hohlraum 58 zwischen dem transparenten Wärmedämmelement 11 und dem Absorber 12 mittels jeweils eines oberhalb und unterhalb des Speichers 14 ausgebildeten Kanals 60,61 mit einem hinter dem raumseitigen Wärmeübertrager 15 ausgebildeten Kanal 62 verbunden. An dem oberen und unteren Endabschnitt 63,64 des Wärmeübertragers 15 ist ein Luftdurchlaß 15 ausgebildet, durch den der Kanal 62 mit dem angrenzenden Raum 100 verbunden ist. Die Luftdurchlässe 65 sind mittels Klappen 66 zu verschließen oder aber zu öffnen.

Vorzugsweise ist der Wärmeübertrager 15 als Platte aus einem Werkstoff ausgebildet, der nach Erwärmung durch die im Kanal 62 geführte Luft eine Wärmeabgabe in den Raum 100 durch Strahlung und Konvektion ermöglicht. Am Ausgang des unteren Kanals 61 ist eine Klappe 67 vorgesehen, die je nach Stellung ein Schließen des Kanals 61 oder aber auch zusätzlich ein Schließen der unteren Durchbrechung 68 des kanalartigen Hohlraums 58 ermöglicht. Der Speicher 14 besteht aus vertikal angeordneten Speichersegmenten 69, die jeweils im Abstand zueinander angeordnet sind und zwischen denen kanalartige Hohlräume 70 ausgebildet sind. Diese Hohlräume 70 erstrecken sich vom unteren Kanal 61 bis zum oberen Kanal 60. Die Ausgänge des kanalartigen Hohlraums 58 und der kanalartigen Hohlräume 70 zum oberen Kanal 60 können jeweils mittels einer Klappe 71 verschlossen werden. Es ist möglich, in dem oberen Kanal 60 vor dem oberen Luftdurchlaß 65 des Wärmeübertragers 15 einen Ventilator vorzusehen. Der obere Kanal 60 ist über eine Durchbrechung 72, die mittels der Klappe 59 verschließbar ist, mit der Außenluft verbunden. Ferner ist an den oberen Kanal 60 ein weiterer Kanal 63 angeschlossen, der mit einem Speicher und bzw. mit einer weiteren Gebäudezone verbunden sein kann. Die überströmöffnung 73 zwischen dem oberen Kanal 60 und dem weiteren Kanal 74 kann mittels einer Klappe 75 geschlossen oder aber im Querschnitt gedrosselt werden. Dieses Solarheizmodul 10 ermöglicht es, dem Raum 100 neben der durch die eingestrahlte Sonnenenergie aufgenommene Wärme durch Schwerkraftwirkung Frischluft von außerhalb des Gebäudes zuzuführen.

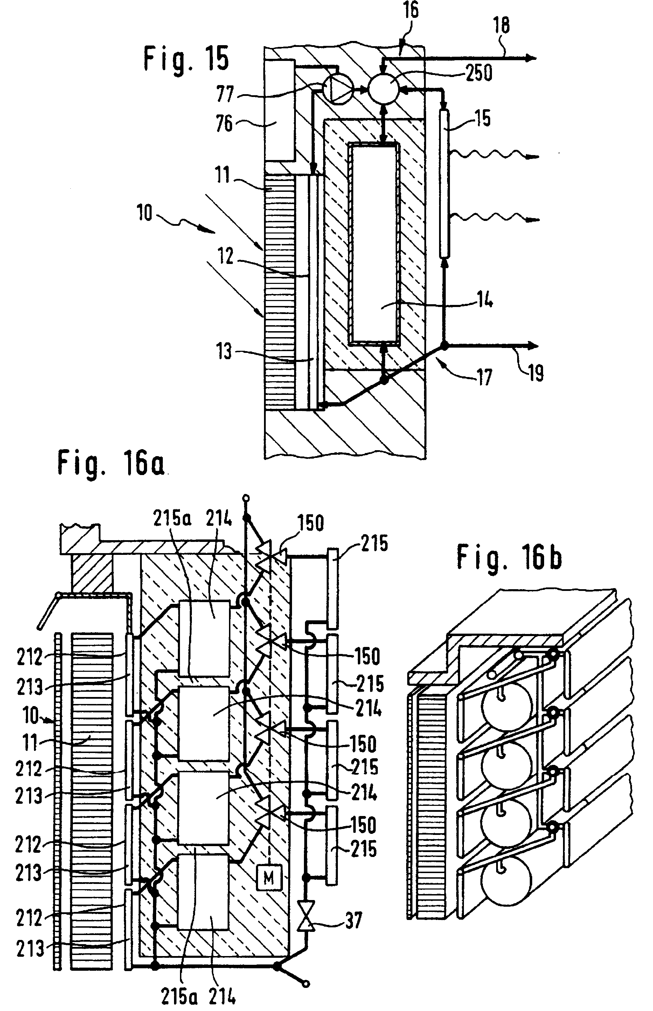

Die in Fig. 15 dargestellte Ausführungsform des Solarheizmoduls 10 entspricht in ihrem prinzipiellen Aufbau der in Fig. 8 dargestellten Ausführungsform, so daß auf die entsprechende Beschreibung Bezug genommen wird. Bei dieser Ausführungsform ist jedoch oberhalb des Wärmedämmelementes 11 ein fotoelektrisches Element 76 angeordnet, dessen aus der Solarstrahlung erzeugte elektrische Energie einer Pumpe 77 oder Ventilator zugeführt wird, die in der inneren Vorlaufleitung 40 angeordnet ist und den an sich vorgesehenen passiven Schwerkraftbetrieb unterstützt. Bei dieser Ausführungsform kann auch vorgesehen sein, daß das fotoelektrische Element 76 gleichzeitig zur Messung der vorhandenen Solarenergie verwendet wird, wobei über einen in der Zeichnung nicht dargestellten Integrator zeitabhängige Beobachtungen hinsichtlich der zur Verfügung stehenden Solarenergie durchführbar sind.

Bei einer weiteren Ausführungsform des Solarheizmoduls 10, die in Fig. 16a schematisch und in Fig. 16b anhand eines praktischen Ausführungsbeispiels dargestellt ist, wird der Speicher 14 und der raumseitige Wärmeübertrager 15 jeweils in eine Anzahl von Einzelabsorbern 212, Einzelwärmeübertragern 213, Einzelspeichern 214 und Einzelwärmeübertragern 215 aufgeteilt, wobei jeweils einem Speicher 214 ein Wärmeübertrager 215 zugeordnet ist. Zwischen den einzelnen Speichern 214 sind Wärmedämmelemente 215a angeordnet, so daß in jedem Wärmespeicher ein vom Temperaturgefälle des benachbarten Wärmespeichers unabhängiges Temperaturgefälle ausbildbar ist. Der Vorteil dieser Ausführungsform ist, daß das Solarmodul auch schon nach Aufnahme kleinster Wärmemengen über den Absorber 12 und den Wärmeübertrager 13 Wärme sehr effektiv speichern und über die raumseitigen Wärmeübertrager 215 abgeben kann. Darüber hinaus ergibt sich der Vorteil, daß die Einzelspeicher 215 mit rundem Querschnitt konzipiert werden können, was die Verwendung von Rohren zuläßt, was zu großen herstellungstechnischen Vorteilen führt. über die Ventile 150 kann eine Schaltung so vorgenommen werden, daß das Medium in jeder Untereinheit 212 bis 215 durch Schwerkraft zirkuliert und durch eine andere Stellung der Ventile 150 gekoppelt einheitlich als Gesamtmodul über die äußeren Vor- und Rücklaufleitungen 18,19 an eine Gesamtanlage anschließbar ist.

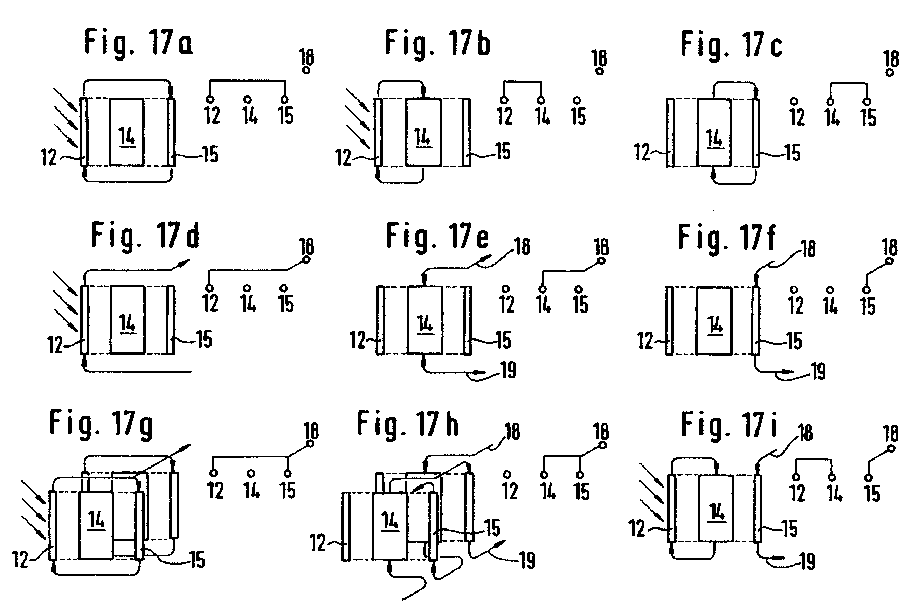

In Fig. 17a bis 17i sind neun Betriebszustände eines Solarheizmoduls 10 dargestellt, die von der jeweiligen Stellung der Absperr- und Regelarmaturen 45,45a (Fig.10) bzw. eines unten beschriebenen Mehrwegeventils abhängen. Maßgeblich sind hierbei die Meßwerte der Temperatursensoren 49,50,51 (Fig.10), des Raumtemperatursensors 47 sowie die Vorgabe durch den Raumtemperatursollwertversteller 48. Bei der Ventilschaltung nach Fig. 17a wird das in dem Absorber 12 bzw. in dem Wärmeübertrager 13 durch die Solarstrahlung erwärmte Wärmeträgermedium ausschließlich dem raumseitigen Wärmeübertrager 15 des zugehörigen Solarheizmoduls 10 zugeführt. Bei der Schaltung nach Fig. 17b besteht für eine Wärmezufuhr zum Raum 100 kein Bedarf, so daß der Absorber 12 den Speicher 14 des betreffenden Solarheizmoduls 10 auflädt. Die Schaltung nach Fig. 17c ist dann erforderlich, wenn in dem Raum 100 ein Wärmebedarf besteht, der durch Wärmeaufnahme des Absorbers 12 nicht gedeckt werden kann. In diesem Fall wird die in dem Speicher 14 gespeicherte Wärmeenergie durch Verbindung des Speichers 14 mit dem raumseitigen Wärmeübertrager 15 dem Raum 100 zugeführt. Eine Schaltung nach Fig. 17d ist dann erforderlich, wenn der Speicher 14 geladen und eine Wärmeabgabe des vom Absorber 12 zum raumseitigen Wärmeübertrager 15 strömenden Wärmeträgermediums in den Raum 100 nicht erforderlich ist. In diesem Fall wird das im Absorber 12 erwärmte Wärmeträgermedium über die äußere Vorlaufleitung 18 beispielsweise zu einem nicht näher dargestellten Speicher oder aber zu einer anderen Gruppe von Solarheizmodulen 10 geführt. Eine Schaltung nach Fig. 17e ist dann erforderlich, wenn in anderen Gebäudezonen ein Wärmebedarf besteht und aus dem Speicher 14 des Solarheizmoduls 10 gespeicherte Wärmeenergie über die äußere Vorlaufleitung 18 abgezogen werden kann. In Fällen, in denen für die Aufheizung des Absorbers 12 keine ausreichende Solarenergie vorhanden ist, kann es erforderlich sein, gemäß der Schaltung nach Fig. 17f über die äußere Vorlaufleitung 18 dem raumseitigen Wärmeübertrager 15 von einem Speicher oder aber der zentralen Heizanlage erwärmtes Wärmeträgermedium zuzuführen. Diese Schaltung gilt sinngemäß auch dann, wenn dem raumseitigen Wärmeübertrager 15 ein abgekühltes Medium zugeführt werden muß, um eine ausreichende Kühlung des zugeordneten Raumes 100 zu ermöglichen. Eine Schaltung gemäß Fig. 17g ist dann erforderlich, wenn der Speicher 14 aufgeladen und dennoch von dem Absorber 12 dem raumseitigen Wärmeübertrager 15 mehr Wärmeenergie zugeführt wird als zur Temperierung des Raumes 100 erforderlich ist. In diesem Fall wird ein Teil des im Absorber 12 aufgeheizten Wärmeträgermediums über die äußere Vorlaufleitung 18 z.B. einem Speicher oder aber einer in einem anderen Bereich der Gebäudeaußenfläche angeordneten Gruppe von Solarheizmodulen 10 zugeführt. Bei einer Schaltung nach Fig. 17h wird dem Solarheizmodul 10 über die äußere Vorlaufleitung 18 erwärmtes Wärmeträgermedium zugeführt. Dieses durchströmt sowohl den raumseitigen Wärmeübertrager 15 wie auch den Speicher 14. Hierbei werden bei zwei benachbarten Solarheizmodulen 10 bei dem ersten Solarheizmodul 10 sowohl der Speicher 14 wie auch der Wärmeübertrager 15 von dem Wärmeübertragermedium durchströmt, während beim zweiten Solarheizmodul 10 das aus dem Speicher 14 des ersten Solarheizmoduls 10 ausströmende Wärmeträgermedium sowohl den raumseitigen Wärmeübertrager 15 wie auch den Speicher 14 durchströmt.

Fig. 17i zeigt eine Betriebsstellung eines Solarheizmoduls 10, bei dem die durch Solarstrahlung dem Absorber 12 zugeführte Energie ausschließlich zur Aufheizung des Speichers 14 verwendet wird. Dem raumseitigen Wärmeübertrager 15 wird die zur Raumkonditionierung erforderliche Energie über die äußere Vorlaufleitung 18 zugeführt.

Es ist möglich, an jedem Solarheizmodul 10 statt der Absperr- und Regelarmaturen 45,45a ein Mehrwegeventil 130;131 vorzusehen. Mittels dieser Mehrwegeventile 130;131 kann jeder Absorber 12, Speicher 14 und raumseitiger Wärmeübertrager 15 eines Solarheizmoduls 10 mit der äußeren Vorlaufleitung 18 verbunden werden. Zur Betätigung der Mehrwegeventile 130,131 können diese jeweils mit einem Stellmotor 132 versehen sein. Das Mehrwegeventil 130 besteht aus einem allgemein zylindrischen Grundkörper 133 und einer drehbar gelagerten Ventilscheibe 134 zur Umsteuerung des Strömungsdurchgangs jeweils bei einer Drehung um 30° (Fig.18 und 19). In dem unteren Bereich der Mantelfläche 135 des zylindrischen Grundkörpers 133 sind um 120° zueinander versetzt Durchbrechungen 136 ausgebildet, an die jeweils der Absorber 12, der Speicher 14 oder der Wärmeübertrager 15 des betreffenden Solarheizmoduls 10 angeschlossen ist. An der Ventilscheibe 134 ist über einen halben Kreisumfang von 180° ein in den unteren Bereich des zylindrischen Grundkörpers 133 gerichteter Mantel 140 ausgebildet. Dieser ist durch eine Ausnehmung 141 von 30° in ein 90° Mantelsegment 132 und ein 60° Mantelsegment 143 unterteilt. In der Ventilscheibe 134 sind ferner drei Durchbrechungen 144 von jeweils 30° Breite in Abständen von 120° und 90° ausgebildet. Die eine Durchbrechung 144 schließt an die Ausnehmung 141. Die auf diese Durchbrechung 144 folgenden weiteren Durchbrechungen 144 haben jeweils zur erstgenannten Durchbrechung 144 einen Abstand von 120°. Oberhalb der Ventilscheibe 134 ist ein Ventilraum ausgebildet, der mit der äußeren Vorlaufleitung 18 verbunden ist. In der bodenseitigen Kreisfläche dieses Ventilraums sind drei Durchbrechungen 145 mit der Breite von 30° ausgebildet, von denen die eine Durchbrechung 145 koaxial zur Mittelachse einer der Durchbrechungen 136 ausgerichtet ist. Die weiteren Durchbrechungen 145 sind zu der erstgenannten Durchbrechung 145 um 30° bzw. 60° versetzt angeordnet.

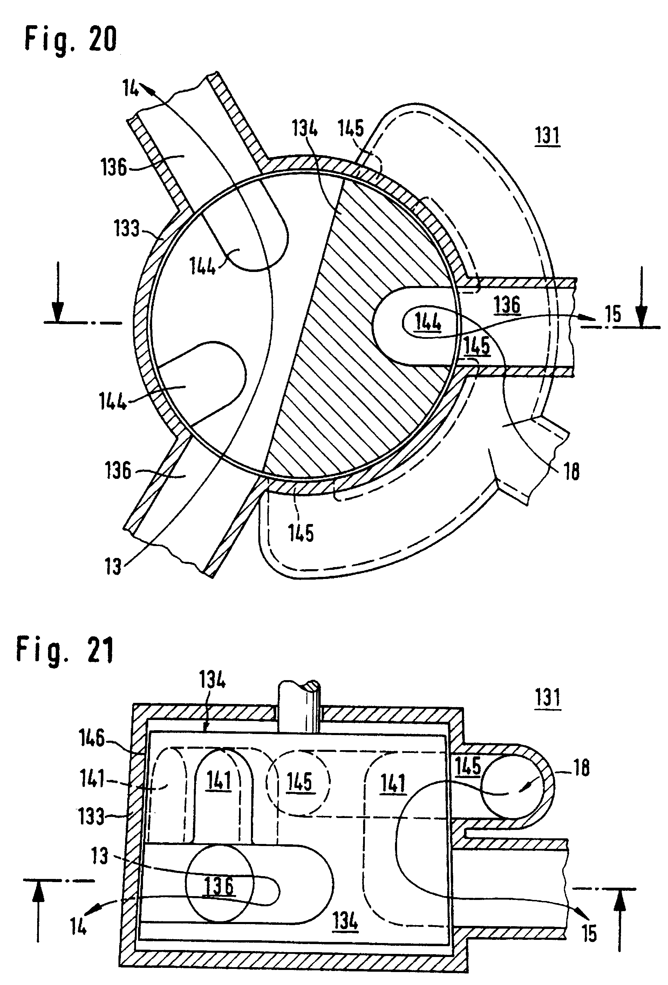

Das Mehrwegeventil 131 weist eine gegenüber dem Mehrwegeventil 130 kompaktere Gestaltung auf. Bei diesem Mehrwegeventil 131 ist der Grundkörper 133 konisch oder kegelförmig ausgebildet. In diesem Grundkörper 133 ist die Ventilscheibe 134 mit ebenfalls konischer oder kegelförmiger Mantelfläche 140 gelagert. Die Durchbrechungen 144 sind in einer Ebene angeordnet, die den Durchbrechungen 145 für die Verbindung mit der äußeren Vorlaufleitung 18 entspricht. Die Durchbrechungen 136 für den Anschluß des Absorbers 12, Speichers 14 und raumseitigen Wärmeübertragers 15 befinden sich dagegen in einer tiefer gelegenen Ebene (Fig.20 und 21).

Es ist möglich, jedes Mehrwegeventil 130,131 mit einer Recheneinheit zu verbinden, mittels der durch Ermittlung der Stellung der Ventilscheibe 134 das Laden- und Entladen eines jeden Speichers 14 sowie die Wärmeabgabe einem jeden Wärmeübertragers 15 und damit der Wärmeverbrauch eines jeden Raumes 100 bestimmt werden kann.

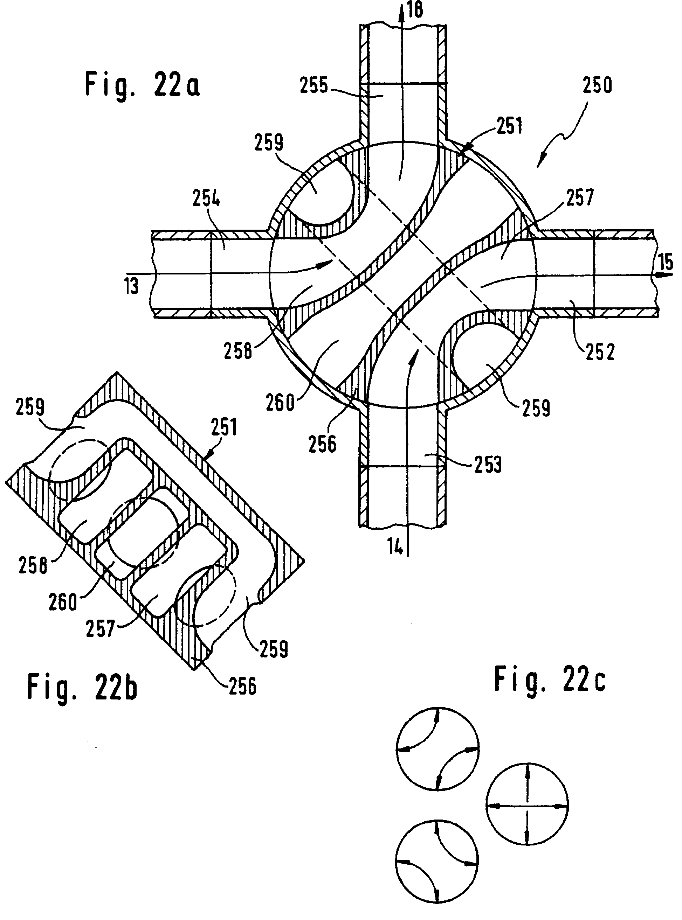

In Fig. 22a-22c ist ein Mehrwegeventil 250 dargestellt, das an gleicher Stelle Einsatz finden kann wie das Mehrwegeventil 130;131, und das insbesondere bei dem Solarmodul gemäß Fig.8 und Fig.15 Verwendung finden kann. Hierbei handelt es sich um eine ebenso einfache wie zweckmäßige Ausführungsform, bei der das Mehrwegeventil 250 aus einem zylindrischen Grundkörper 251 mit einer schüsselartigen Form und einer in diesem drehbar gelagerten Ventilscheibe 256 besteht. Der Grundkörper 250 weist vier in einer Ebene um 90° versetzte Anschlüsse 252,253,254,255 auf, die zum Anschluß an die inneren und äußeren Vorlaufleitungen vorgesehen sind. Die Ventilscheibe 256 ist als Formkörper ausgebildet, dessen Form dem schüsselartigen Aufbau des Grundkörpers 251 in etwa entspricht, wobei vier Kanäle 257,258,259,260 so ausgebildet sind, daß sie in einer Stellung des Ventilkörpers 256 zwei gegenüberliegende Anschlüsse 252,254 oder 253,255 verbinden und in einer weiteren Stellung, die nach einer Drehung der Ventilscheibe 256 um 45° erreicht wird, zwei nebeneinanderliegende Anschlüsse 252,253 und 254,255 verbinden. Die entsprechenden Strömungswege hierzu sind in der Fig.22c angedeutet.

Die Gestaltung der Kanäle 257-260 ist dabei so ausgeführt, daß möglichst große Querschnitte entstehen, um dem Durchfluß einen möglichst geringen Strömungswiderstand entgegenzusetzen.

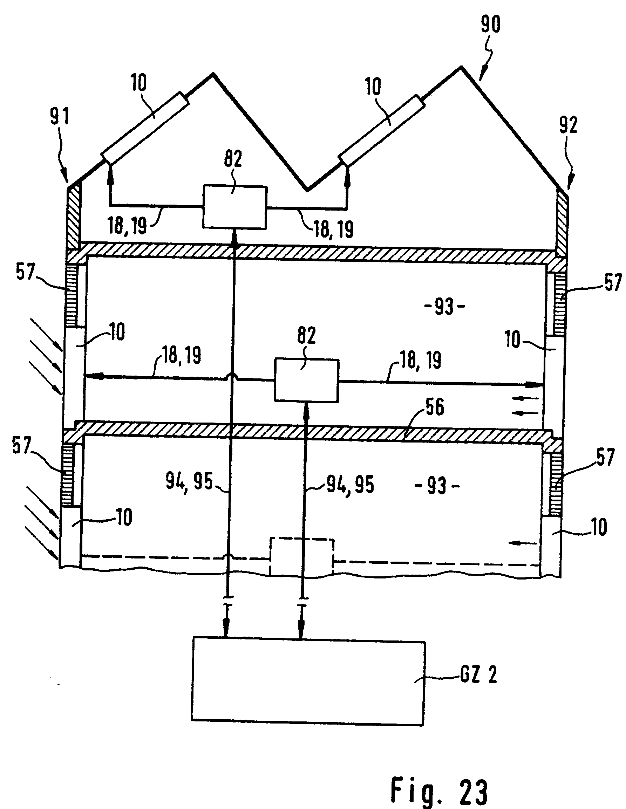

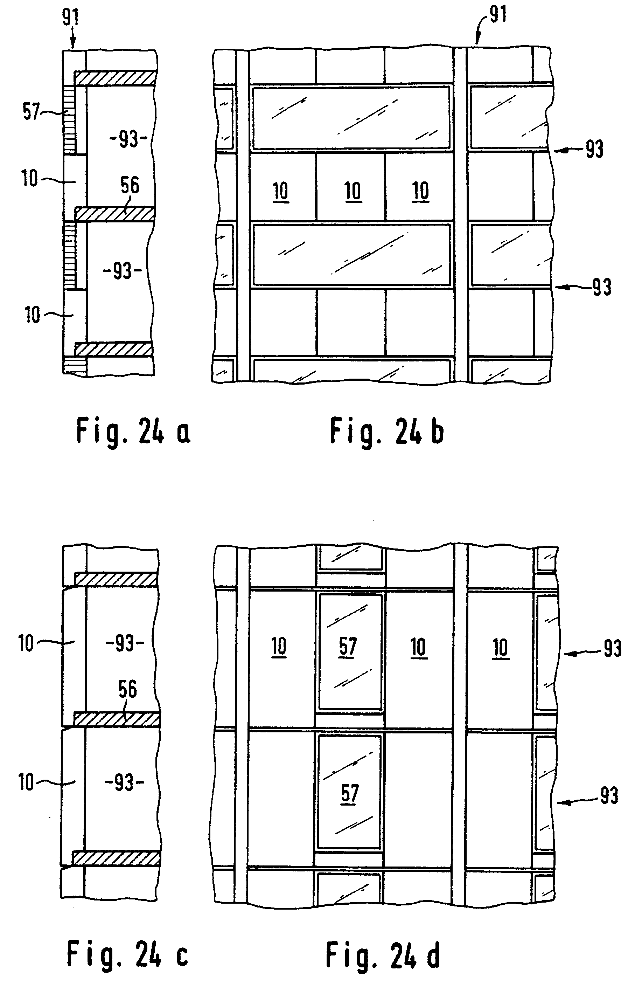

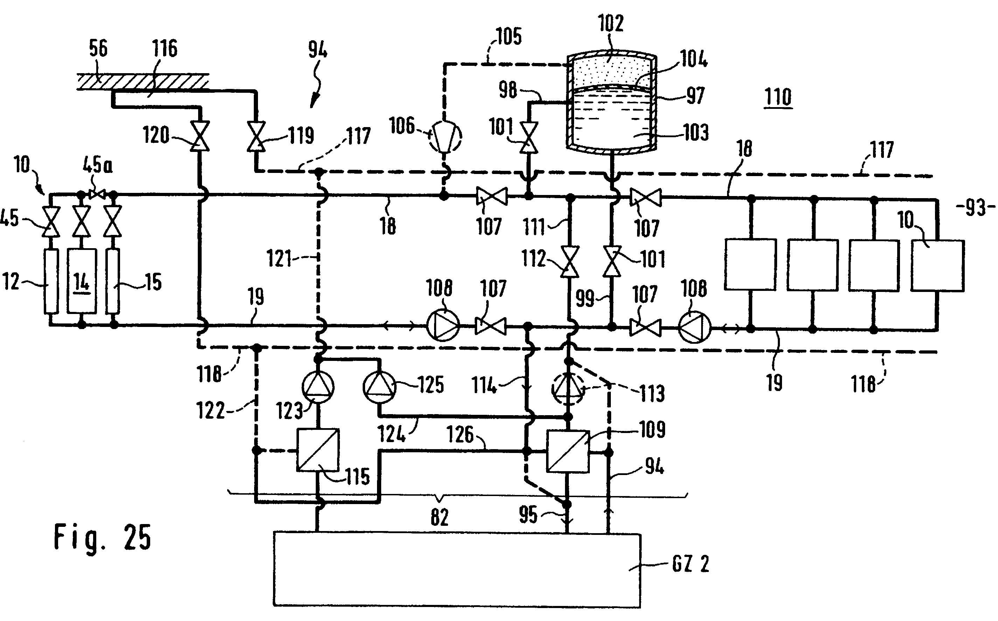

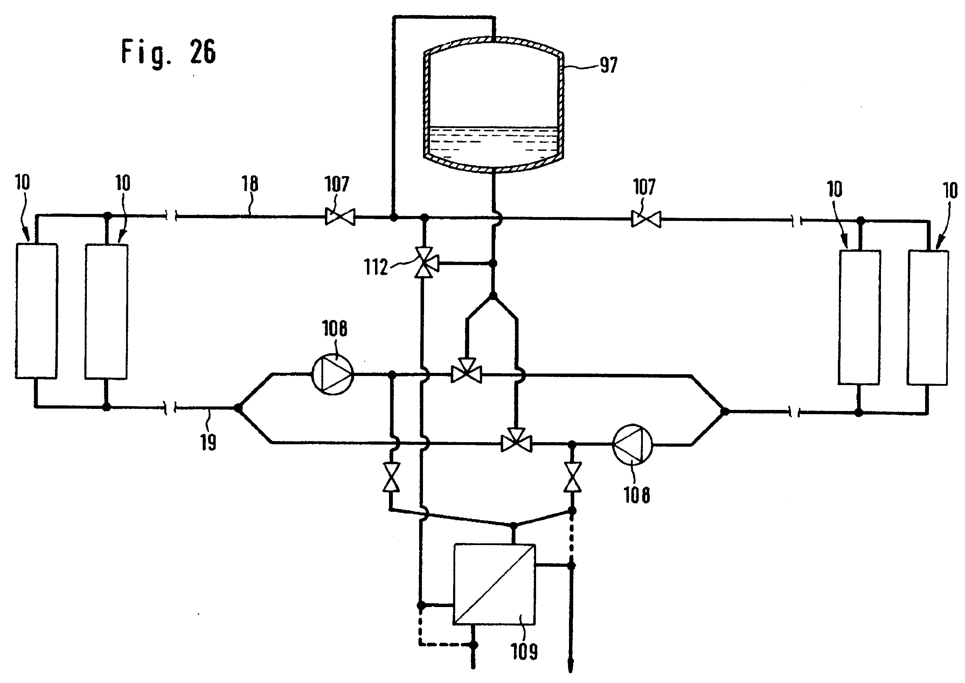

In den Fig.23 bis 26 sind Einzelbeispiele für eine Anlage für eine Solarheizung mit Solarheizmodulen in einem Gebäudequerschnitt (Fig.23), die Anordnung von Solarheizmodulen innerhalb einer Anlage in einer Fassade (Fig.24a-24d) und Beispiele für geschossweise Anlagenschaltungen (Fig.25 und 26) dargestellt.

Fig.23 zeigt schematisch den Querschnitt durch ein Gebäude 90 mit zwei einander gegenüberliegenden Fassaden 91,92. Unterhalb der Fenster 57 einer jeden Fassade 91, 92 ist jeweils ein Solarheizmodul 10 angeordnet, das weiter oben näher beschrieben wurde. Jedes Solarheizmodul 10 ist auf der Geschossdecke 56 abgestützt und bis zur Oberkante der Fenster 57 des darunterliegenden Geschosses 93 geführt. Die den Fassaden 91,92 zugeordneten Gruppen von Solarheizmodulen 10 sind mittels einer äußeren Vorlaufleitung 18 und einer äußeren Rücklaufleitung 19 mit einer Geschoßzentrale 82 verbunden. Die Solarheizmodule 10 können auch in den der Sonne zugewandten Flächen von Dächern angeordnet werden, wie es in der Zeichnung dargestellt ist. Auch diese Solarheizmodule 10 sind über eine äußere Vorlaufleitung 18 und eine äußere Rücklaufleitung 19 mit einer Geschosszentrale 82 verbunden. Jede Geschosszentrale 82 weist außer geschossartiger Regeleinrichtungen einen nicht näher dargestellten Wärmetauscher auf, der über eine Vorlaufleitung 94 und Rücklaufleitung 95 mit einer zentralen Heizanlage 96 verbunden ist. Ggf. kann zusätzlich eine Verbindung mit einer zentralen Kühlanlage vorgenommen werden. Es ist auch möglich, Solarheizmodule 10, die in verschiedenen Geschossen 93 z.B. an der Gebäudeaußenfläche übereinander angeordnet sind, zu einr Gruppe zu verbinden. Wie in Fig.23 schematisch durch Pfeile angedeutet, wird von den Solarheizmodulen 10 an dem besonnten Teil der Gebäudeaußenfläche Solarstrahlung in Wärmeenergie umgewandelt. In zeitweilig unbesonnten Teilen der Gebäudeaußenfläche befindliche Solarheizmodule 10 können dagegen durch Nutzung des in ihren Speichern befindlichen Wärmeträgermediums zur Wärmeversorgung der ihnen zugeordneten Gebäudezonen herangezogen werden. Da die Solarheizmodule 10 der einen Gebäudeseite im Bereich der Fassade 91 über die Geschosszentrale 82 mit den Solarheizmodulen 10 der anderen Gebäudeseite im Bereich der Fassade 92 verbunden sind, kann ein Wärmeausgleich zwischen einer besonnten und unbesonnten Fassade hergestellt werden. Ferner ist es möglich, unterschiedliche Anforderungen der Raumbenutzer auszugleichen. Dieses wird unterstützt durch den Anschluß der Geschosszentralen 82 an das Energieverteilungssystem des gesamten Gebäudes, wodurch eine ergänzende Unterstützung durch konventionelle Heiz- und Kühleinrichtungen möglich ist.

An Gebäudeaußenflächen, die ständig unbesonnt sind, wie z.B. nordseitige Fassaden eines Gebäudes, können Module 10 eingesetzt werden, bei denen auf das transparente Wärmedämmelement und den Absorber verzichtet wird.

Die in Fig.23 schematisch dargestellten Solarheizmodule 10 ersetzen die sonst im Hochbau andersartig ausgebildete Brüstung. Innenseitig stehen die Solarheizmodule 10 auf der Geschossdecke 56, während sie außenseitig die tragende Konstruktion verdecken und sich von der Unterkante eines Fensters 57 des einen Geschosses 93 bis zur Oberkante eines Fensters 57 des darunterliegenden Geschosses 93 erstrecken. Ein Solarheizmodul 10 ist hierbei eine für sich betriebsfähige Einheit für einen passiven Betrieb.

In den Fig.24a bis 24d ist die Außenansicht von mit Solarheizmodulen 10 versehenen Fassaden 91 im Ausschnitt schematisch dargestellt. Fig.24a und 24b zeigen die Anordnung der Solarheizmodule 10 zwischen den Fenstern 57 zweier Geschosse 93. Bei der Ausbildung nach Fig.24c und 24d sind die Solarheizmodule 10 jeweils geschossweise neben den Fenstern 57 angeordnet. In diesem Fall sind die Solarheizmodule 10 raum- bzw. geschosshoch ausgebildet.

Fig.25 zeigt in Ergänzung zu Fig.23 eine Anlage 110, bei der zwei jeweils einer Fassade 94,95 zugeordnete Gruppen von Solarheizmodulen 10 über eine Geschosszentrale 82 mit einer zentralen Heizanlage in der Gebäudezentrale GZ2 in Verbindung stehen. Für den Bereich der Fassade 94 ist lediglich ein Solarheizmodul 10 mit den Grundbauelementen Absorber 12 zur Aufnahme von Solarenergie, Speicher 14 für Wärmeträgermedium und raumseitiger Wärmeübertrager 15 dargestellt. Die Funktion des Solarheizmoduls 10 wird durch entsprechende Ansteuerung von Ventilen 45,45a geregelt. Es ist ein als Austauschspeicher ausgebildeter Geschoß-Speicher 97 vorgesehen, der mittels einer Anschlußleitung 98 mit der äußeren Vorlaufleitung 18 und mittels einer Anschlußleitung 99 mit der äußeren Rücklaufleitung 19 verbunden ist. In den Anschlußleitungen 98,99 ist als Absperrarmatur 101 jeweils ein Ventil o.dgl. vorgesehen. Der Geschoß-Speicher 97 ist vorzugsweise als hochliegender gasgefüllter Austauschbehälter ausgebildet. Zwischen Gasraum 102 und Wasserraum 103 kann z.B. eine Membran 104 angeordnet sein. Es ist möglich, in dem Gasraum 102 des Geschoß-Speichers 97 als druckhaltendes Gas ein inertes Gas wie Stickstoff o.dgl. vorzusehen. Darüber hinaus kann der als Austauschspeicher dienende Geschoß-Speicher 97 auch als Ausdehnungsgefäß ausgebildet sein. Es ist ferner möglich, den Gasraum 102 mittels der in Fig.3 in Strichlinien dargestellten Druckhalteleitung 105 mit Kompressor 106 mit der äußeren Vorlaufleitung 18 zu verbinden. Beidseitig der Anschlüsse der Anschlußleitungen 98,99 an die äußere Rücklaufleitung 19 bzw. äußere Vorlaufleitung 18 sind Absperrarmaturen 107 vorgesehen, die z.B. Schieber, Ventile oder Klappen sein können. Den Absperrarmaturen 107 in der äußeren Rücklaufleitung 19 sind ferner Pumpen oder Ventilatoren 108 zugeordnet. Mittels der Absperrarmaturen 107 und der Pumpen oder Ventilatoren 108 ist es möglich, bei entsprechender Steuerung des Wärmeträgermedium der einen Gruppe von Solarheizmodulen 10 in den Geschoß-Speicher 97 zu fördern und danach das in der anderen Gruppe von Solarheizmodulen 10 befindliche Wärmeträgermedium in die Solarheizmodule der ersten Gruppe zu fördern. Dieses kann dann z.B. in diesen Solarheizmodulen 10 durch Sonnenstrahlung aufgeheizt werden. Anschließend wird das im Geschoß-Speicher 97 befindliche Wärmeträgermedium der zuvor ersten Gruppe von Solarheizmodulen 10 in die Gruppe der entleerten Solarheizmodule 10 gefördert und kann in diesem Gebäudebereich zur Heizung oder Kühlung beitragen. Dies geschieht durch Betrieb der Pumpen oder Ventilatoren 108 oder auch der Kompressoren 106, von denen nur einer dargestellt ist und ein weiterer der anderen Gruppe von Solarheizmodulen 10 zuzuordnen wäre. Es ist möglich, durch entsprechende Steuerung von Absperrarmaturen in den Solarheizmodulen 10 lediglich das in den jeweiligen Speichern 14 und Wärmeübertragern 15 der Solarheizmodule 10 befindliche Wärmeträgermedium aus dem Bereich von einer Fassade zu dem Bereich einer anderen Fassade zu fördern.

Die Geschosszentrale 82 weist einen Zentral-Wärmeübertrager 109 auf, an den die äußere Vorlaufleitung 18 mittels einer Anschlußleitung 111 mit Absperrarmatur 112 und ggf. einer Pumpe 113 und die äußere Rücklaufleitung 19 mittels einer Anschlußleitung 114 angeschlossen ist. Mittels der Pumpe 113 erfolgt die Umwälzung des Wärmeträgermediums durch den Zentral-Wärmeübertrager 109. Der Zentral-Wärmeübertrager 109 ist ferner mittels einer Vorlaufleitung 94 und einer Rücklaufleitung 95 mit der zentralen Heizanlage der Gebäudezentrale GZ2 verbunden. Es ist ebenfalls möglich, ergänzend eine Anschlußmöglichkeit des Zentral-Wärmeübertragers 109 an eine zentrale Kühlanlage vorzusehen. Durch die Zwischenschaltung der Zentral-Wärmeübertrager 109 in den einzelnen Geschossen 93 eines Gebäudes ist es möglich, die geschossweise ausgebildeten Anlagen 110 mit einem relativ geringen statischen Druck zu betreiben, wodurch die Absorber 12, raumseitigen Wärmeübertrager 15 und Speicher 14 keiner starken mechanischen Dimensionierung bedürfen. Bei z.B. eingeschossiger Bauweise des Gebäudes ist es auch möglich, auf einen Zentral-Wärmeübertrager 109 zu verzichten und die Vorlaufleitung 94 der zentralen Heizanlage der Gebäudezentrale GZ2 direkt mit der Anschlußleitung und die Rücklaufleitung 95 der zentralen Heizanlage der Gebäudezentrale GZ2 direkt mit der Anschlußleitung 114 zu verbinden.

Es ist möglich, zusätzlich eine Kühlanlage 115 vorzusehen, die mit weiteren Zusatz-Wärmeübertragern 116 verbunden ist.

Die Zusatzwärmeübertrager 116 können zusätzlich zu den raumseitigen Wärmeübertragern 15 der Solarheizmodule 10 diesen zugeordnet werden und/oder aber als großflächige Wärmeübertrager z.B. unter Geschossdecken angeordnet werden. In Fig.25 ist die Ausbildung eines Zusatzwärmeübertragers 116 unter einer Decke angedeutet. Die Zusatzwärmeübertrager 116 sind an eine Vorlaufverteilleitung 117 und eine Rücklaufsammelleitung 118 über eine Absperr- und Regelarmatur 119 und eine Absperrarmatur 120 angeschlossen. Die Vorlaufverteilleitung 117 ist mittels der Vorlaufleitung 121 und die Rücklaufsammelleitung 118 ist mittels der Rücklaufleitung 122 mit dem Zentral-Speicher 115 verbunden. In der Vorlaufleitung 121 ist eine Umwälzpumpe 123 angeordnet, durch die Kühlmedium von dem Zentralspeicher 115 den Zusatzwärmeübertragern 116 zugeführt wird. Die von dem Zentralspeicher 115 und den Zusatzwärmeübertragern 116 gebildete Kühlanlage kann dezentral oder zentral ausgebildet sein.

Die Vorlaufleitung 121 und Rücklaufleitung 122 ist ferner mittels einer Speichervorlaufleitung 124 mit Pumpe 125 mit der Anschlußleitung 111 und mittels einer Speicherrücklaufleitung 126 mit dem Zentral-Wärmeübertrager 109 verbunden. Hierdurch kann bei Stillstand der zentralen Kühlanlage der Zusatz-Wärmeübertrager 116 auch mit Heizmedium beschickt werden und zusätzlich zu den raumseitigen Wärmeübertragern 15 zur Raumheizung beitragen. Hierdurch ist es möglich, für die Winterperiode, in der die Sonnenaufheizung der Absorber 12 der Solarheizmodule 10 nur begrenzt ist, die Grundwärmeversorgung der Räume mit dem dann geringen Temperaturniveau über die raumseitigen Wärmeübertrager 15 der Solarheizmodule 10 und eine Zusatzwärmeversorgung durch die Zusatzwärmeübertrager 116 durchzuführen. Im Sommer können diese Zusatzwärmeübertrager 116 dann z.B. als Kühldecken betrieben werden. Sofern die Zusatzwärmeübertrager 116 nur zum Heizen dienen sollen, entfällt die Kühlanlage 115.

Der Zusatzwärmeübertrager 116 ist entbehrlich, wenn der raumseitige Wärmeübertrager 15 nur zeitweise mit dem vom Solarheizmodul bereitgestellten Temperaturniveau, jedoch in einem vorgegebenen Zeitraum, mit einem überhöhten Temperaturniveau aus der zentralen Wärmeerzeugung betrieben wird, so daß die gewünschte Temperierung des Raumes in zeitlichem Ausgleich erreicht wird.

Zur Vermeidung von Betriebsstörungen ist es erforderlich, die Absorber 12 und raumseitigen Wärmeübertrager 15 sowie Speicher 14 der Solarheizmodule 10 ggf. entleeren zu können. Hierzu können z.B. die auf einer Geschossebene befindlichen Solarheizmodule 10 durch die Pumpen 108 in den Geschoß-Speicher 97 entleert werden. Zur anschließenden Wiederbefüllung der Absorber 12, raumseitigen Wärmeübertrager 15 und Speicher 14 wird das Wärmeträgermedium durch Eigengewicht wieder aus dem Geschoß-Speicher 97 zu den Solarheizmodulen 10 geleitet.

In Fig.26 ist eine entsprechende Anlage vereinfacht dargestellt, wobei hier die gleichen Bezugszeichen wie bei Fig.25 verwendet wurden, so daß hierauf Bezug genommen wird.

## Patentansprüche

1. Verfahren zum Heizen und/oder Kühlen eines Gebäudes unter Nutzung von Solarenergie, wobei die Außenflächen des Gebäu- des mindestens teilweise mit transparentem Wärmedämmungsmaterial und mit einer Solarenergieabsorptionseinrichtung versehen sind und die Wärmeverluste und die Wärmeaufnahme wegen naturgemäß geringer Energiedichte auf den Außenflächen von Gebäuden derart reguliert werden, daß im Gebäude die Raumtemperaturen einstellbar sein sollen,
dadurch gekennzeichnet, daß
a) eine Anzahl der Wärme- und Kälte-Angebote meßtechnisch nach Quantität (Wärmeleistung) und Qualität (Temperaturniveau) klassifiziert, mit der Veränderung im Zeitablauf, nach örtlicher Position in einem Gebäude und im jeweiligen Bauelement erfaßt werden, indem die Wärmequellen und Wärmesenken der Außenluft und der Solarstrahlung, der Gebäudeaußenflachen hinter der transparenten Wärmedämmung, der Speichermassen in der Gebäudehülle und in den Umhüllungen der genutzten Räume, der dezentralen und zentralen Anlagen zur Speicherung von Wärmeträgermedien sowie der Abwärme aus der Nutzung des Gebäudes wie Abluft, Abwasser, Beleuchtung, Geräte, Personenwärme usw. nach Ort, Zeit, Temperatur und Wärmemenge erfaßt und klassifiziert abgespeichert werden,
b) eine Anzahl der örtlichen Bedarfe an Heizung und Kühlung und die Veränderung dieser Bedarfe über die Zeit im Gebäude meßtechnisch und klassifiziert erfaßt werden,
c) die Angebote und Bedarfe nach Wärmeleistung und Temperaturniveau und Uhrzeit klassifiziert in einer zentralen Rechenanlage bilanziert den minimalen zusätzlichen Versorgungsbedarf aus konventionellen, ggf. zentralen Wärme- und Kälteerzeugungsanlagen in einem Zeitabschnitt im Gebäude ergeben und die klassifizierten Energieangebote und Bedarfe nach Ort- und Zeit-Positionen so einander im Rechner zugeordnet werden, daß sie vorrangig im Schwerkraftbetrieb (passiver Betrieb) zwischen den transparent gedämmten Außenflächen und den angrenzenden Innenräumen, zweitrangig im aktiven Betrieb mit Hilfsenergie über kurze Zeitabschnitte, drittrangig im Gebäudegeschoß bzw. über geringe geodätische Höhenunterschiede und letztrangig im Gebäude - auch im örtlich-zeitlichen Ringtausch mehrerer Positionen - ausgleichbar sind,
d) die Wärmeenergie oder Kälte der im Rechner ermittelten Zuordnung der Positionen in einem Leitungs- oder Kanalnetz über ein Wärmeträgermedium direkt räumlich ausgetauscht und ggf. über eine Zwischenspeicherung auch zeitlich verschoben ausgetauscht wird,
e) daß aus den Temperaturen der Energieangebote für die Optimierung und Zuordnung zeitgleiche Mischtemperaturen zur Anpassung an den Temperaturbedarf errechnet werden und entsprechende Mischtemperaturen in Wärmeträgermedien erzeugt und transportiert werden, und/oder für die Bedarfsdeckung mit Mischraumtemperaturen über die Zeit eine zeitlich nacheinander in Intervallen ablaufende Zuordnung gerechnet und die Energie ohne Mischung der Wärmeträgermedien aus den Angeboten real übertragen wird,
f) daß hinter der transparenten Wärmedämmung (11) an der Gebäudeaußenseite die Solarstrahlung durch einen Absorber (12) in Wärmeenergie umgewandelt und diese auf ein Wärmeträgermedium in dem dem Absorber (12) zugeordneten Wärmeübertrager (13) übertragen wird und daß dann direkt das Wärmeträgermedium in Abhängigkeit von dem Wärmeoder Kühlbedarf der jeweiligen Gebäudezone zur passiven Versorgung mindestens einem raumseitigen Wärmeübertrager (15) der dem Solarheizmodul (10) zugeordneten ersten Gebäudezone und/oder zur aktiven Versorgung mindestens einem weiteren raumseitigen Wärmeübertrager (15) einer außerhalb der Grenzen der der ersten dem Solarheizmodul (10) zugeordneten Gebäudezone befindlichen weiteren Gebäudezone oder ganz oder teilweise einer Kälteerzeugungseinrichtung zugeführt wird, oder daß die Wärmeenergie vom dem den Absorber (12) zugeordneten Wärmeübertrager (13) über das Medium im Solarheizmodul (bei 14) gespeichert und dann zeitlich versetzt passiv einem raumseitigen Wärmeübertrager (15) der ersten Gebäudezone und/oder aktiv mindestens einem Solarheizmodul (10) einer weiteren Gebäudezone zugeführt wird, und
g) daß das in der Gebäudeaußenfläche (91) einer Gebäudezone erwärmte Wärmeträgermedium in beliebigem Wechsel entweder passiv den Speichern (14) und/oder raumseitigen Wärmeübertragern (15) dieser einen Gebäudezone und/oder aktiv einer anderen Gebäudezone zugeführt wird.

2. Verfahren nach Anspruch 1,
dadurch gekennzeichnet,
daß Wärmeangebote hinter der transparenten Wärmedämmung, die ein Temperaturniveau erreichen, welches sich zum Betrieb einer Absorptionskälteanlage eignen, gesondert erfaßt, in Kältegrößen umgerechnet, bilanziert, zugeordnet und einer Absorptionskälteanlage zugeleitet werden.

3. Verfahren nach einem der Ansprüche 1 oder 2,
dadurch gekennzeichnet,
daß die Wärme im passiven bzw. Schwerkraftbetrieb über die Höhe des Solarheizmoduls (10) nach Temperatur geschichtet (bei 14) und/oder in horizontalen Schichten getrennt (bei 213, 214, 215) innerhalb des Moduls übertragen wird.

4. Verfahren nach einem der Ansprüche 1 bis 3,
dadurch gekennzeichnet,
daß das Wärmeträgermedium jeweils eines Gebäudegeschosses ganz oder teilweise im Geschoß die Wärme an ein weiteres Wärmeträgermedium oder Kühlmittel überträgt, welches die Wärme zwischen dem Gebäudegeschoß und einem zentralen Speicher (109), einer zentralen Heizanlage oder Kühlanlage der Gebäudezentrale (GZ2) des Gebäudes transportiert.

5. Verfahren nach einem der Ansprüche 1 bis 4,
dadurch gekennzeichnet,
daß in sich wiederholender Weise das in den Speichern (14) und/oder raumseitigen Wärmeübertragern (15) der Solarheizmodule (10) an der Gebäudeaußenfläche (92) der einen kühleren Gebäudezone befindliche Wärmeträgermedium im jeweiligen Gebäudegeschoß oder Gebäudehöhenbereich zwischengespeichert wird, dann das in den Speichern (14) und/oder absorberseitigen Wärmetauschern (13) der anderen Gebäudezone bzw. Gebäudeaußenfläche (91) erwärmte Wärmeträgermedium den Speichern (14) und/oder raumseitigen Wärmeübertragern (15) der ersten Gebäudezone bzw. Gebäudeaußenfläche (92) zugeführt wird und dann das zwischengespeicherte, zu erwärmende Wärmeträgermedium den absorberseitigen Wärmetauschern (13) und ggf. den Speichern der wärmegewinnenden anderen Gebäudeaußenfläche (91) zugeführt wird oder daß Wärmeträgermedien verschiedener Temperatur oder Dichte in einem Gebäudehöhenbereich über mindestens eine Zwischenspeicherung unter den mindestens zwei Gebäudezonen (91, 92) in anderer Reihenfolge ausgetauscht werden.

6. Verfahren nach Anspruch 5,
dadurch gekennzeichnet,
daß ein Wärmeträgermedium im Austauschverfahren durch ein zweites Medium, flüssig oder gasförmig, welches sich nicht mit dem ersten Medium mischt, gebäudezonenweise ganz oder teilweise im System ersetzt wird.

7. Verfahren nach einem der Ansprüche 1 bis 6,
dadurch gekennzeichnet,
daß das erwärmte Wärmeträgermedium ganz oder teilweise einer Absorptionskältemaschine zugeführt wird, deren Kühlmittel durch mindestens einen raumseitigen Wärmeübertrager (15; 116) in mindestens einer Gebäudezone geführt wird.

8. Verfahren nach einem der Ansprüche 1 bis 7,
dadurch gekennzeichnet,
daß der Strom des Wärmeträgermediums geschoßweise durch eine zentrale Geschoßregelung und/ oder für das Gesamtgebäude durch eine zentrale Regelung in Abhängigkeit vom Wärme- oder Kühlbedarf der Gebäudezonen und dem örtlich unterschiedlichen Wärme- oder Kälteangebot geregelt wird.

9. Verfahren nach einem der Ansprüche 1 bis 8,
dadurch gekennzeichnet,
daß der raumseitige Wärmeübertrager des Solarheizmoduls (10) ergänzend und unabhängig von zentralen Regelungen auch manuell (bei 37) regelbar ist.

10. Anlage zur Durchführung des Verfahrens nach einem der Ansprüche 1 bis 9,
gekennzeichnet durch ein oder mehrere an der Gebäudeaußenfläche ggf. rasterartig oder großflächig anzuordnende Solarheizmodule (10) mit jeweils einem wettergeschützten transparenten Wärmedämmelement (11), an dessen der Sonneneinstrahlung abgewandter Seite ein Absorber (12) mit einem Wärmeübertrager (13) angeordnet ist, der mit einem raumseitigen Wärmeübertrager (15) und einem Speicher (14) über mindestens eine innere Vorlaufleitung (40, 42, 43, 44) und mindestens eine innere Rücklaufleitung (41) bzw. innere Kanäle derart verbunden ist, daß das Wärmeträgermedium passiv durch Schwerkraft im Kreislauf vom absorberseitigen Wärmeübertrager (13) zum Speicher (14) oder vom Speicher (14) zum raumseitigen Wärmeübertrager (15) strömt, wobei über äußere Vor- und Rücklaufleitungen (18, 19) bzw. Kanäle eine Verbindung zu anderen Solarheizmodulen und zentralen Regeleinrichtungen für den aktiven Transport des Wärmeträgermediums hergestellt ist,
daß die äußere Vorlaufleitung (18) und die äussere Rücklaufleitung (19) direkt mit zentralen Speichern, einer zentralen Heizanlage und/oder Kühlanlage der Gebäudezentrale (GZ2) verbunden sind,
daß Gruppen von Solarheizmodulen (10) über für die Gruppen, Geschosse (93) oder Gebäudezonen zentral angeordnete Absperrarmaturen (107, 101) und Pumpen oder Ventilatoren (108) steuerbar sind und die Pumpen bzw. Ventilatoren (168), Absperrarmaturen (107, 101, 45, 45a) und Klappen (59, 66, 67, 71, 75) mit Stellgliedern verbunden sind, die von einem zentralen programmgesteuerten Leitrechner betätigbar sind,
daß an dem Absorber (12) mindestens eines einem Raum (100) zugeordneten Solarheizmoduls (10) ein Temperatursensor (49), im oberen und unteren Bereich des Speichers (8) Temperatursensoren (50, 51) und im Raum (100) ein Raumtemperatursensor (47) und ein Raumtemperatursollwertversteller (48) angeordnet sind, die mit einem Regler oder dem zentralen Leitrechner verbunden sind,
daß der zentrale Leitrechner mit den Regelgliedern der Zentral-Wärmeübertrager (109), des Geschoß-Speichers (97) und der zentralen Heizanlage und einer ggf. zentralen Kühlanlage der Gebäudezentrale (GZ2) verbunden ist.

11. Anlage nach Anspruch 10,
dadurch gekennzeichnet,
daß bei höheren Gebäuden und Betrieb mit einem flüssigen Wärmeträgermedium in jedem Geschoß (93) die äußere Vorlaufleitung (18) und äußere Rücklaufleitung (19) mit einem Geschoß-Wärmeübertrager (109) und/oder einem Geschoß-Speicher (97) verbunden sind, die jeweils hydraulisch an die zentrale Speicheranlage, Heiz- und/oder Kühlanlage der Gebäudezentrale (GZ2) angeschlossen sind.

12. Anlage nach einem der Ansprüche 10 bis 11,
dadurch gekennzeichnet,
daß der Geschoß-Speicher (97) als Mischgefäß und/oder Ausdehnungsgefäß ausgebildet ist.

13. Anlage nach einem der Ansprüche 10 bis 12,
dadurch gekennzeichnet,
daß die Speicher (14) und/oder raumseitigen Wärmeübertrager (15) und ggf. die Absorber (12) einer Gruppe von Solarheizmodulen (10) mit mindestens einem hochliegenden gasgefüllten und als Austauschspeicher ausgebildeten Geschoß-Speicher (97) verbunden sind, wobei in mindestens einer der mit der äußeren Vorlaufleitung (18) und äußeren Rücklaufleitung (19) verbundenen Anschlußleitungen (98, 99) des Geschoß-Speichers (97) eine Absperrarmatur, wie Ventil, Schieber oder Klappe, angeordnet ist.

14. Anlage nach Anspruch 13,
dadurch gekennzeichnet,
daß in dem Geschoß-Speicher (97) zwischen Gasraum (102) und Wasserraum (103) eine Membran (104) angeordnet ist.

15. Anlage nach Anspruch 13,
dadurch gekennzeichnet,
daß der Gasraum (102) des Geschoß-Speichers (97) mit einem inerten Gas, wie Stickstoff od.dgl., gefüllt ist.

16. Anlage nach einem der Ansprüche 10 bis 15,
dadurch gekennzeichnet,
daß mindestens einer Raumzone ein Zusatz-Wärmeübertrager (116) zugeordnet ist, der über eine Vorlaufleitung (117) und eine Rücklaufleitung (118) direkt oder indirekt mit einer zentralen Heizanlage der Gebäudezentrale (GZ2) und/oder einer zentralen Kühlanlage verbunden ist.

17. Anlage nach Anspruch 16,
dadurch gekennzeichnet,
daß der Zusatz-Wärmeübertrager (116) vor dem raumseitigen Wärmeübertrager (15) eines Solarheizmoduls (10) angeordnet und als Röhrenradiator od.dgl. ausgebildet ist.

18. Anlage nach Anspruch 16,
dadurch gekennzeichnet,
daß der Zusatz-Wärmeübertrager (116) in oder an einer Wand, in oder an der Decke oder dem Fußboden angeordnet ist.

19. Anlage nach einem der Ansprüche 10 bis 18,
dadurch gekennzeichnet,
daß mindestens ein Absorber (12) der Solarheizmodule (10) mit einer Absorptionskältemaschine verbunden ist, deren Verdampfer mit mindestens einem in oder an einer Wand und/oder in oder an einer Decke angeordneten Zusatz-Wärmeübertrager (116) verbunden ist.

20. Anlage nach einem der Ansprüche 10 bis 19,
dadurch gekennzeichnet,
daß jeder dem Absorber (12) zugeordnete Wärmeübertrager (13), Speicher (14) und raumseitiger Wärmeübertrager (15) mit der äußeren Vorlaufleitung (18) des Solarheizmoduls (10) mittels eines Mehrwegeventils (130, 131) verbunden ist, durch das der Strömungsdurchgang druckverlustarm jeweils durch Drehung einer Ventilscheibe (134) umsteuerbar ist.

21. Anlage nach Anspruch 20,
dadurch gekennzeichnet,
daß jedes Mehrwegeventil (130, 131) mit einem Stellmotor (132) verbunden ist.

22. Anlage nach Anspruch 20,
dadurch gekennzeichnet,
daß das Mehrwegeventil (130) aus einem allgemein zylindrischen Grundkörper (133) und einer drehbar gelagerten Ventilscheibe (134) zur Umsteuerung des Strömungsdurchgangs jeweils bei einer Drehung um 30 Grad besteht, daß in dem unteren Bereich der Mantelfläche des zylindrischen Grundkörpers (133) um 120 Grad zueinander versetzt Durchbrechungen (136) ausgebildet sind, an die jeweils der Absorber (12), der Speicher (14) und der Wärmeübertrager (15) angeschlossen sind, daß an der Ventilscheibe (134) über einen halben Kreisumfang von 180 Grad ein in den unteren Bereich des zylindrischen Grundkörpers (133) gerichteter Mantel (140) ausgebildet ist, der durch eine Ausnehmung (141) von 30 Grad in ein 90 Grad Mantelsegment (142) und ein 60 Grad Mantelsegment (143) unterteilt ist, und daß in der Ventilscheibe (134) drei Durchbrechungen (144) von 30 Grad Breite in Abständen von 120 Grad und 90 Grad ausgebildet sind, von denen die eine Durchbrechung (144) an die Ausnehmung (141) anschließt und die auf diese Durchbrechung (144) folgenden weiteren Durchbrechungen (144) jeweils einen Abstand von 120 Grad haben, und daß der oberhalb der Ventilscheibe (134) ausgebildete Ventilraum mit der äußeren Vorlaufleitung (18) verbunden ist und in der bodenseitigen Kreisfläche drei Durchbrechungen (145) mit einer Breite von 30 Grad aufweist, von denen die eine koaxial zur Mittelachse einer der Durchbrechungen (136) ausgerichtet ist und die weiteren Durchbrechungen (145) zu dieser um 30 Grad bzw. 60 Grad versetzt angeordnet sind.

23. Anlage nach Anspruch 22,
dadurch gekennzeichnet,
daß der Grundkörper (133) konisch oder kegelförmig ausgebildet ist, in dem die Ventilscheibe (134) mit ebenfalls konischer oder kegelförmiger Mantelfläche gelagert ist, in der die Durchbrechungen (144) in einer den Durchbrechungen (145) für die Verbindung mit der äußeren Vorlaufleitung (18) entsprechenden Ebene und die Durchbrechungen (136) für den Anschluß von Absorber (12), Speicher (14) und raumseitigem Wärmeübertrager (15) in einer darunter befindlichen Ebene angeordnet sind.

24. Anlage nach Anspruch 22 oder 23,
dadurch gekennzeichnet,
daß jedes Mehrwegeventil (130, 131) mit einer Recheneinheit verbunden ist, mittels der durch Ermittlung der Stellung der Ventilscheibe (134) das Laden und Entladen jedes Speichers (14) sowie die Wärmeabgabe jedes raumseitigen Wärmeübertragers (15) und damit der Wärmeverbrauch eines jeden Raumes (100) bestimmbar ist.

25. Anlage nach Anspruch 20,
dadurch gekennzeichnet,
daß das Mehrwegeventil (250) aus einem allgemein zylindrischen Grundkörper (251) mit vier in einer Ebene um 90 Grad versetzten Anschlüssen und einer drehbar gelagerten Ventilscheibe (256) zur Umsteuerung des Strömungsdurchgangs jeweils bei einer Drehung um 45 Grad besteht und daß in der Ventilscheibe (256) Kanäle (257, 258, 259, 260) ausgebildet sind, die in einer Stellung der Ventilscheibe (256) gegenüberliegende Anschlüsse (252, 254; 253, 255) verbinden und die in einer weiteren Stellung der Ventilscheibe je zwei nebeneinanderliegende Anschlüsse (252, 253; 254, 255) verbinden.

26. Solarheizmodul (10) zur Umwandlung von Solar strahlung in Wärmeenergie und zur Verwendung zum Heizen und/oder Kühlen eines Gebäudes, zur Durchführung des Verfahrens nach Anspruch 1 bis 9 und zur Verwendung in einer Anlage nach Anspruch 10 bis 25, bei dem an der der Sonneneinstrahlung abgewandten Seite eines wettergeschützten transparenten Wärmedämmelements (11) ein Absorber (12) angeordnet ist, der mit einem absorberseitigen Wärmeübertrager (13) verbunden ist, der mit einem raumseitigen Wärmeübertrager (15) und einem Speicher (14) über mindestens eine innere Vorlaufleitung (40, 42, 43, 44) und eine innere Rücklaufleitung (41) bzw. innere Kanäle derart verbunden ist, daß das Wärmeträgermedium passiv durch Schwerkraft im Kreislauf vom absorberseitigen Wärmeübertrager (13) zum raumseitigen Wärmeübertrager (15), vom Absorber (12) zum Speicher (14) oder vom Speicher (14) zum raumseitigen Wärmeübertrager (15) bzw. umgekehrt führbar ist,
dadurch gekennzeichnet,
daß der Speicher (14) in dem Solarheizmodul (10) etwas höher als der Absorber (12) mit dem Wärmeübertrager (13) und etwas tiefer als der raumseitige Wärmeübertrager (15) und räumlich zwischen beiden (12, 15) angeordnet ist, und daß der dem Absorber (12) zugeordnete Wärmeübertrager (13), der Speicher (14) und der raumseitige Wärmeübertrager (15) untereinander und ggf. mit der äußeren Vorlaufleitung (18) bzw. der äußeren Rücklaufleitung (19) des Solarheizmoduls (10) mittels Absperrund Regelelementen (24,25,26,35,36,37;45,45a) oder eines Mehrwegeventils (130,131;140;250) verbunden sind.

27. Solarheizmodul nach Anspruch 26,
dadurch gekennzeichnet,
daß der Solarheizmodul (10) mit einem flüssigen Wärmeträgermedium hinter der transparenten Wärmedämmung (11) aus horizontal getrennten Untereinheiten besteht, die jeweils einen Absorber (212) mit einem Wärmeübertrager (213), einen Speicher (214) und einen über ein Dreiwegeventil (150) angeschlossenen raumseitigen Wärmeübertrager (215) enthalten, die so über die inneren Vor- und Rücklaufleitungen (40, 41) verbunden sind, daß das Medium in jeder Untereinheit (212 bis 215) durch Schwerkraft zirkuliert und durch eine andere Stellung der Ventile (150) gekoppelt einheitlich als Gesamtmodul über die äußeren Vor- und Rücklaufleitungen (18, 19) an eine Gesamtanlage anschließbar ist.

28. Solarheizmodul nach Anspruch 26,
dadurch gekennzeichnet,
daß über äußere Vor- und Rücklaufleitungen (18, 19) bzw. Kanäle eine Verbindung zu anderen Solarheizmodulen und zentralen Einrichtungen für den aktiven Transport des Wärmeträgermediums zusätzlich herstellbar ist.

29. Solarheizmodul nach einem der Ansprüche 26 bis 28,
dadurch gekennzeichnet,
daß ein Teil des Gebäudes, der Gebäudehülle oder der Gebäude-Tragkonstruktion selbst als Speicher (14; 54) verwendet ist.

30. Solarheizmodul nach einem der Ansprüche 26 bis 29,
dadurch gekennzeichnet,
daß alle Speicher (14) und die verbindenden Leitungen oder Kanäle ganz oder teilweise von einer Wärmedämmschicht (38) umgeben sind.

31. Solarheizmodul nach einem der Ansprüche 26 bis 30,
dadurch gekennzeichnet,
daß das transparente Wärmedämmelement (11) im Abstand (S) von dem Absorber (12) unter Ausbildung eines kanalartigen Hohlraums (58) angeordnet ist, der unten und oben offen und am oberen Endabschnitt mittels einer Klappe (59) verschließbar ist.

32. Solarheizmodul nach einem der Ansprüche 26 bis 31,
dadurch gekennzeichnet,
daß jedes Solarheizmodul (10) zum Einbau unterhalb eines Fensters (57) eines Geschosses bis zur Oberkante der Fenster des darunter liegenden Geschosses oder geschoßhoch neben den Fensterelementen oder unabhängig von Fenstern großflächig in der Wand oder im Dach als Fertigbauteil ausgebildet ist, wobei das Speichermedium aus Wasser oder Stein bestehend getrennt nach der Montage der Solarheizmodule (10) einfüllbar ist.

33. Solarheizmodul nach einem der Ansprüche 26 bis 32,
dadurch gekennzeichnet,
daß neben dem Wärmedämmelement (11) ein photoelektrisches Element (76) angeordnet ist, dessen erzeugte elektrische Energie einer in den Leitungen des Solarheizmoduls (10), bevorzugterweise einer in der inneren Vorlaufleitung (40) angeordneten Pumpe (77) zuführbar ist.

34. Solarheizmodul nach einem der Ansprüche 26 bis 33,
dadurch gekennzeichnet,
daß den mit der inneren Vorlaufleitung (40) verbundenen Vorlaufanschlußleitungen (42, 43, 44) des absorberseitigen Wärmeübertragers (15), Speichers (14) und raumseitigen Wärmeübertragers (15) Absperrund Regelarmaturen (45) angeordnet sind.

35. Solarheizmodul nach einem der Ansprüche 26 bis 34,
dadurch gekennzeichnet,
daß in der inneren Vorlaufleitung (40) zwischen den Vorlaufanschlußleitungen (44, 43) des raumseitigen Wärmeübertragers (15) und Speichers (14) eine Absperr- und Regelarmatur (45a) angeordnet ist.

36. Solarheizmodul nach einem der Ansprüche 26 bis 35,
dadurch gekennzeichnet,
daß in der äußeren Vorlaufleitung (18) und der äußeren Rücklaufleitung (19) Absperrarmaturen, wie Ventile oder Klappen, angeordnet sind.

37. Solarheizmodul nach einem der Ansprüche 26 bis 36,
dadurch gekennzeichnet,
daß in der äußeren Vorlaufleitung (18) oder der äußeren Rücklaufleitung (19) Pumpen oder Ventilatoren zur Förderung von Wärmeträgermedium angeordnet sind.

38. Solarheizmodul nach einem der Ansprüche 26 bis 37,
dadurch gekennzeichnet,
daß ein zwischen dem Wärmedämmelement (11) und dem Absorber (12) ausgebildeter Hohlraum (58) vorgesehen ist, daß der kanalartige Hohlraum (58) mittels je eines oberhalb und unterhalb des Speichers (14) ausgebildeten Kanals (60, 61) mit einem hinter dem Wärmeübertrager (15) ausgebildeten Kanal (62) verbunden ist, der mittels eines am oberen und unteren Endabschnitt (63, 64) des Wärmeübertragers (15) angeordneten Luftdurchlasses (65) mit dem angrenzenden Raum (100) verbunden ist.

39. Solarheizmodul nach Anspruch 38,
dadurch gekennzeichnet,
daß die Luftdurchlässe (65) als Klappen (66) od.dgl. ausgebildet sind.

40. Solarheizmodul nach Anspruch 39,
dadurch gekennzeichnet,
daß der Wärmeübertrager (15) als Platte ausgebildet ist.

41. Solarheizmodul nach einem der Ansprüche 38 bis 40,
dadurch gekennzeichnet,
daß am Ausgang des unteren Kanals (61) eine Klappe (67) angeordnet ist, mittels der der Kanal (61) verschließbar ist.

42. Solarheizmodul nach Anspruch 41,
dadurch gekennzeichnet,
daß mittels der Klappe (67) der Kanal (61) und der untere Öffnungsabschnitt des kanalartigen Hohlraums (57) verschließbar ist.

43. Solarheizmodul nach einem der Ansprüche 37 bis 42,
dadurch gekennzeichnet,
daß der Speicher (14) aus vertikalen Speichersegmenten (69) besteht, zwischen denen jeweils ein sich zwischen dem oberen und unteren Kanal (60, 61) erstreckender kanalartiger Hohlraum (70) ausgebildet ist, der mittels einer Klappe (71) verschließbar ist.

44. Solarheizmodul nach einem der Ansprüche 37 bis 43,
dadurch gekennzeichnet,
daß der Ausgang (72) des kanalartigen Hohlraums (58) in den oberen Kanal (60) mittels einer Klappe (71) verschließbar ist.

45. Solarheizmodul nach einem der Ansprüche 37 bis 44,
dadurch gekennzeichnet,
daß in dem oberen Kanal (60) vor dem oberen Luftdurchlaß (65) ein Ventilator angeordnet ist.

46. Solarheizmodul nach einem der Ansprüche 37 bis 45,
dadurch gekennzeichnet,
daß der obere Kanal (60) mit einem weiteren Kanal (74) verbunden ist, der mit einem Speicher verbindbar ist.

47. Solarheizmodul nach Anspruch 46,
dadurch gekennzeichnet,
daß der weitere Kanal (74) mit einer weiteren Gebäudezone verbindbar ist.

## Claims

1. Method for the heating and/or cooling of a building by the utilization of solar energy, in which the external surfaces of the building are at least in part provided with transparent heat insulation material and with a solar radiation absorption means and the heat losses and the heat absorption, due to a naturally low energy density on the external surface areas of buildings are regulated in such a way that, inside the building, the room temperatures are intended to be adjustable,
characterized in that
a) a number of the supplies of heat and cold are metrologically classified according to quantity (calorific efficiency) and quality (temperature level), with the change in the chronological sequence, according to the local position in a building and in the respective structural elements are determined in that the heat sources and heat sinks of the outside air and the solar radiation of the external surface areas of the building behind the transparent heat insulation, the storage materials in the shell of the building and in the casings of the rooms used, the decentral and central installations for the storage of heat carrier media as well as of the waste heat from the use of the building, such as the used air, waste water, lighting, equipment, the heat generated by persons, etc.,are, according to locality, time, temperature and heat volume, determined and stored in a classified manner;
b) a number of the local demands for heating and cooling and the change in these demands in the course of time are metrologically determined in a classified manner;
c) the supply and demand in accordance with calorific efficiency and temparature level and the time of the day are balanced in a central computer unit, while the minimal additional supply requirement from the conventional, possibly central, heat and cold genrating installations within a period of time in the building and the classified energy supplies and demands according to the local and time-related positions are allocated to each other in the computer in such a way that they are balanceable primarily in gravity operation (passive operation) between the transparently insulated external surface areas and the adjacent interiors, of secondary importance in active operation with auxiliary energy over shorter periods of time, of tertiary importance in the building storey or via minor geodetic differences in height and, ranking last, in the building - also in the local time-related circular exchange of several positions;
d) the calorific energy or cold of the allocation of the positions determined in the computer in a pipeline or conduit network with the aid of a heat carrier medium are exchanged direct spatially and, if necessary, also in a chronologically displaced manner via an intermediate storage;
e) in that, from the temperatures of the energy supplies for the optimization and allocation, contemperaneous mixed temperatures for adaptation to the temperature demand are computed and pertinent mixed temperatures are generated and conveyed in heat carrier media and/ or for satisfying the demand for mixed temperatures, over the course of time a chronologically consecutive allocation taking place at intervals and the energy is transmitted real without any mixing of the heat carrier media from the supplies;
f) in that, behind the transparent heat insulation (11), on the outside of the building, the solar radiation is converted by an absorber (12) into thermal energy and the same is transferred on to a heat carrier medium into the heat transmitting means (13) allocated to the absorber (12) and in that the heat carrier medium is then supplied direct in dependence upon the heating or cooling demand of the respective building zone for the passive supply to at least one heat transmitting means (15) on the side of thr room of the first building zone allocated to the solar heating module (10) and/or the active supply of at least one further heat transmitting means (15) on the room side of the building zone located outside the limits of the first building zone allocated to the solar heating module (10), or wholly or partly to a cold generating means, or in that the thermal energy from the heat transmitting means (13) allocated to the absorber (12) is stored via the medium in the solar heating module (at 14) and then, chronologically shifted, is passively supplied to a heat transmitting means (15) on the room side of the first building zone and/or actively to at least one solar heating module (10) of a further building zone, and
g) in that the heat carrier medium heated in the external building surface (91) of a building zone, in arbitrary alternation, is supplied either passively to the storage means (44) and/or to the heat transmitting means (15) on the room side of this one building zone and/or actively to another building zone.

2. Method according to Claim 1,
characterized in that
thermal supplies behind the transparent heat insulation which reach a temperature level which renders them suitable for the operation of an absorption cooling plant, are determined separately, converted into cold values, balanced, allocated and supplied to an absorption refrigeration plant.

3. Method according to either Claim 1 or 2,
characterized in that
the heat is transmitted within the module in passive or gravity operation via the height of the solar heating module (10) arranged in layers according to temperature (at 14) and/or separated into horizontal layers (at 213, 214,215).

4. Method according to any of Claims 1 to 3,
characterized in that
the heat carrier medium of one storey at a time, wholly or partly transmits the heat to a further heat carrier madium or coolant, which conveys the heat between the floor of the building and a central storage means (109), a central heating plant or cooling plant of the control room (GZ2) of the building.

5. Method according to any of Claims 1 to 4,
characterized in that,
in a repetitive manner, the heat carrier medium in the storage means (14) and/or room-side heat transmitting means (15) of the solar heating module (10) on the external surface area of the building located in the one cooler building zone is intermediately stored in the respective building storey or building height area, the heat carrier madium heated in the storage means (14) and/or heat exchangers (13) on the absorber side of the other building zone or external building surface area (91) is then supplied to the storage means (14) and/or to heat transmitting means (15) on the room side of the first building zone or external building surface area (92) and in that the intermediately stored heat carrier medium to be heated is supplied to the heat exchangers (13) on the absorber side and, if necessary, to the storage means of the heat-producing other external building surface area (91), or in-that heat carrier media possessing different temperature or density are exchanged in a building height area via at least one intermediate storage amongt the at least two building zones (91,92) in a different sequence.

6. Method according to Claim 5,
characterized in that
a heat carrier medium in the exchange method is replaced by a second medium, liquid or gaseous, which does not intermix with the first medium, by building zones wholly or partly in the system.

7. Method according to any of Claims 1 to 6,
characterized in that
the heated heat carrier medium is supplied entirely or in part to an absorption refrigeration machine, whose coolant is conducted by means of at least one heat exchanger (15; 16) on the room side into at least one building zone.

8. Method to any of Claims 1 to 7,
characterized in that
the flow of the heat carrier medium is regulated in a storey-wise manner by means of a central storey control and/or for the entire building, by means of a central regulation in dependence upon the heating or cooling demand of the building zones and the locally different supply of heat or cold.

9. Method according to any of Claims 1 to 8,
characterized in that
the heat exchanger on the room side of the solar heating module (10) is controllable complementarily and independently of central regulations also manually (at 37).

10. Installation for performing the method according to any of Claims 1 to 9,
characterized by
one or several solar heating modules (10) to be disposed on the external building area possibly in a raster-like fashion or in a large-surface manner each having a weatherprotected transparent heat insulating element (11), on whose side facing away from the solar radiation an absorber (12) with a heat transmitting means (13) is disposed, which communicates with a heat transmitting means (15) on the room side and a storage means (14) via at least one internal advance flow pipeline (40,42,43,44) and at least one internal return flow pipeline (41) or internal ducts in such a way that the heat carrier medium flows passively by means of gravity in the circulation from the heat transmitting means (13) to the storage means (14) or from the storage means (14) to the heat transmitting means (15) on the room side, in which case, via external advance flow pipelines (18,19) or ducts, a communication with other solar heating modules and central control means is established for the active conveyance of the heat carrier medium, in that the external advance flow pipelines (19) communicate direct with central storage means, a central eating plant and/or cooling plant of the building control room (GZ2), in that groups of solar heating modules (10) are controllable by means of shutoff fittings (107,101) and pumps or' ventilators (108) centrally disposed for the groups, storeys (93) or building zones and the pumps or ventilators (168), shutoff fittings (107,101,45,45a) and flaps (59,66,67,71,75) are connected to final control elements which can be actuated from a central, programmecontrolled master computer,
in that, on the absorber (12), at least of one solar heating module (10) allocated to a room (100), a temperature sensor (49), in the upper and lower region of the storage means (8), temperature sensors (50,51), and in the room (100), one room temperature sensor (47) and a room target temperature adjusting means (48) are disposed which are connected to a controller or to the central master computer, in that the central master computer is connected to the final control elements of the central heat transmitting means (109) of the storey storage means (97) and the central heating plant and possibly to a central cooling plant of the building control room (GZ2).

11. Installation according to Claim 10,
characterized in that,
in taller buildings and in operation with a liquid heat carrier medium on each floor (93), the external advance flow pipeline (18) and external return flow pipeline (19) communicate with a storey heat transmitting means (109) and/or a storey storage means (97), which in each case communicate hydraulically with the central storage system, heating and/or cooling system of the building control room (GZ2).

12. Installation according to any of Claims 10 to 11,
characterized in that
the storey storage means (97) is constructed in the form of a mixing tank and/or expansion tank.

13. Installation according to any of Claims 10 to 12,
characterized in that
the storage means (14) and/or heat transmitting means (15) on the room side and possibly the absorbers (12) communicate with a group of solar heating modules (10) with at least one elevated, gas-filled storey storage means (97) constructed in the form of an exchange storage means, in which case, in at least one of the connection pipes (98, 99) communicating with the advance flow pipeline (18) and external return flow pipeline (19) of the storey storage means (97), s shutoff fitting, such as a valve, slide valve or flap is disposed.

14. Installation according to Claim 13,
characterized in that,
in the storey storage means (97), between the gas space (102) and the water space (103), a diaphragm (104) is disposed.

15. Installation according to Claim 13,
characterized in that
the gas space (102) of the storey storage means (97) is filled with an inert gas, such as nitrogen or suchlike.

16. Installation according to any of Claims 10 to 15,
characterized in that
a supplementary heat transmitting means (116) is allocated to a room zone which communicates direct or indirect via an advance flow pipeline (117) and a return flow pipeline (118) witha central heating plant of the building control room (GZ2) and/or a central cooling plant.

17. Installation according to Claim 16,
characterized in that
the supplementary heat transmitting means (116) is sisposed so as to be before the heat transmitting means (15) of a solar heating module (10) and constructed in the form of a tubular radiator or suchlike.

18. Installation according to Claim 16,
characterized in that
the supplementary heat transmitting means (116) is disposed in or on the ceiling or the floor.

19. Installation according to any of Claims 10 to 18,
characterized in that
at least one absorber (12) of the solar heating module (10) communicates with an absorption refrigeration machine, whose evaporator communicates with at least one supplementary heat transmitting means (116) disposed in or on a wall and/or in or on a ceiling.

20. Installationaccording to any of Claims 10 to 19,
characterized in that
each heat transmitting means (13) allocated to the absorber (12), storage means (14) and room-side heat transmitting means (15), communicates with the external advance flow pipeline (18) of the solar heating module (10) with the aid of a multiway valve (130,131), by means of which the flow passage can in each case be reversed at low pressure loss by the rotation of a valve disc (134).

21. Installation according to Claim 20,
characterized in that
each multiway valve (130,131) is connected to a servomotor (132).

22. Installation according to Claim 20,
characterized in that the multiway valve (130) is comprised of a generally cylindrical base member (133) and a rotatably supported valve disc (134) for reversing the flow passage in each case by a rotation through 30°, in that, in the lower region of the jacket area of the cylindrical base member (133), perforations (136) are constructed that are offset in relation to each other through 130°, with which, in each case, the absorber (12), the storage means (14) and the heat transmitting means (15) communicate, in that, on the valve disc (134), across half a circular circumference of 180°, a jacket (140) directed into the lower area of the cylindrical base member (133) is constructed which, by means of a recess (141) of 30°, is subdivided into a 60° jacket segment (143), and in that, in the valve disc (134), three perforations (144) having a width of 30° are constructed at intervals of 120° and 90°, one of which perforations (144) follows the recess (141) and the further perforations (144) following this perforation (144), are each spaced apart by 120°, and in that the valve space constructed above the valve disc (134) communicates with the external advance flow pipeline (18) and, in the bottom circular area, possesses three perforations (145) having a width of 30°, one of which is aligned coaxially to the centre axis of one of the perforations (136) and the further perforations (145) are disposed in relation to the same so as to be offset through 30° or 60°.

23. Installation according to Claim 22,
characterized in that
the base member (133) is constructed so as to be conical or tapered, in which the valve disc (134) is supported by a likewise conical or tapering jacket surface, in which the perforations (144) are disposed in a plane corresponding to the perforations (144) for the communication with the external advance flow pipeline (18) and the perforations (136) for the communication of the absorber (12), storage means (14) and room-side heat transmitting means (15) are disposed in a plane located therebelow.

24. Installation according to either Claim 22 or 23,
characterized in that
each multiway valve (130,131) is connected to a data processor, with the aid of which, by the determination of the position of the valve disc (134), the charging and discharging of each storage means (14)as well as the heat emission of each room-side heat transmitting means (15) and, with it, the heat consumption of each room (100) can be determined.

25. Installation according to Claim 20,
characterized in that
the multiway valve (250) is comprised of a generally cylindrical base member (251) with four connections offset in a plane by 90° and a rotatably supported valve disc (256) for reversing the flow passage in each case by a rotation through 45°, and in that, in the valve disc (256), ducts (257,258,259,260) are constructed which, in one position of the valve disc (256) connect oppositely located connections (252,254;253,255) and which, in a further position of the valve disc, connect two connections each disposed in a side-by-side arrangement (252,253;254,255).

26. Solar heating module (10) for the conversion of solar radiation into thermal energy and for use for heating and/ or cooling a building, for performing the method according to Claims 1 to 9 and for use in an installation according to Claims 10 to 25, in which, on the side facing away from the solar radiation of a weather-protected transparent heat insulating element (11), an absorber (12) is disposed which communicates with an absorber-side heat transmitting means (13), which communicates with a roomside heat transmitting means (15) and a storage means (14) via at least one internal advance flow pipeline (40,42,43, 44) and an internal return flow pipeline (41) or with internal ducts in such a way that the heat carrier medium can be conducted passively by means of gravity in the circulation from the heat transmitting means (13) on the side of the absorber to the heat transmitting means (15) on the side of the room, from the absorber (12) to the storage means (14) or from the storage means (14) to the heat transmitting means (15) on the side of the room or vice versa,
characterized in that
the storage means (14) in the solar heating module (10) is disposed so as to be somewhat more elevated than the absorber (12) with the heat transmitting means (13) and somewhat lower than the room-side heat transmitting means (15) and so as to be spatially between both (12,15),
and in that the heat transmitting means (13) allocated to the absorber (12), the storage means (14) and the room-side heat transmitting means (15) intercommunicate and possibly with the external advance flow pipeline (18) or the external return flow pipeline (19) of the solar heating module (10) with the aid of shutoff and control elements (24,25,26,35,36,37;45,45a) or a multiway valve (130,131;140;250).

27. Solar heating module according to Claim 26,
characterized in that
the solar heating module (10) with a liquid heat carrier medium behind the transparent heat insulation (11) is comprised of horizontal seperate subunits which comprise in each case an absorber (212) with a heat transmitting means (213), a storage means (214 and a heat transmitting means (215) on the side of the room communicating via a three-way valve (150), which communicate in such a way via the internal advanve flow and return flow pipelines (40,41) that the medium in each subunit (212 to 215) circulates by means of gravity and, by another position of the valves (150), can be caused to communicate with an overall installation uniformly coupled in the form of an overall module via the external advanve flow and return flow pipelines (18,19).

28. Solar heating module according to Claim 26,
characterized in that,
via external advance and return flow pipelines (18,19) or ducts, a communication with other solar heating modules and central facilities for the active conveyance of the heat carrier medium can be additionally established.

29. Solar heating module according to Claim 26,
characterized in that
a part of the building, the building shell or the carrying structure of the building is itself utilized as a storage means (14,54).

30. Solar heating module according to any of Claims 26 to 29,
characterized in that
all the storage means (14) and the communicating pipelines or ducts are completely or in part surrounded by a heat insulation layer (38).

31. Solar heating module according to any of Claims 26 to 30,
characterized in that
the transparent heat insulating element (11) is disposed at a distance (S) from the absorber (12) while forming a duct-like cavity (58), which is open at the bottom and at the top and which can be closed on the upper terminal section by means of a flap (59).

32. Solar heating module according to any of Claims 26 to 31,
characterized in that
each solar heating module (10) is constructed to be mounted below a window (57) of a storey up to the top edge of the window of the storey located therebelow or, at storey level next to the window elements or, independently of the windows, so as to cover a large area in the wall or in the roof and constructed in the form of a prefabricated structural unit, in which case the storage medium consisting of water or stone, can be filled separately subsequent to the mounting of the solar heating module (10).

33. Solar heating module according to any of claims 26 to 32,
characterized in that,
next to the heat insulating element (11), a photoelectric element (76) is disposed, whose generated electric energy can be supplied toa pump (77) disposed in one of the pipelines of the solar heating module (10), by preference in the internal advance flow pipeline (40).

34. Solar heating module according to any of Claims 26 to 33,
characterized in that
shutoff and control fittings (45) are disposed in the advanve flow connection pipes (42,43,44) communicating with the internal advance flow pipeline (40) of the heat transmitting means (45) on the absorber side, of the storage means (14) and the heat transmitting means (15) on the side of the room.

35. Solar heating module according to any of Claims 26 to 34,
characterized in that,
in the internal advance flow pipeline (40), between the advance flow connection pipes (44,43) of the heat transmitting means (15) on the side of the room and of the storage means (14), a shutoff and control fitting (45a) is disposed.

36. Solar heating module according to any of Claims 26 to 35,
characterized in that,
in the external advance flow pipeline (18) and the external return flow pipeline (19), shutoff fittings such as valves or flaps are mounted.

37. Solar heating module according to any of Claims 26 to 36,
characterized in that,
in the external advance flow pipeline (18 or the external return flow pipeline (19), pumps or ventilators are disposed for conveying the heat carrier medium.

38. Solar heating module according to any of Claims 26 to 37,
characterized in that
a cavity (58) constructed between the heat insulating element (11) and the absorber (12) is provided, in that the duct-like cavity (58) communicates with the aid of one duct (60,61) each constructed above and below the storage means (14) with a duct (62) constructed behind the heat transmitting means (15) which, with the aid of an air passage (65) disposed on the top and bottom terminal section (63,64) of the heat transfer means (15), communicates with the adjacent room (100).

39. Solar heating module according to Claim 38,
characterized in that
the air passages (65) are constructed in the form of flaps (66) or suchlike.

40. Solar heating module according to Claim 39,
characterized in that
the heat transfer means (15) is constructed in the form of a plate.

41. Solar heating module according to any of Claims 38 to 40,
characterized in that,
at the outlet of the lower duct (61, a flap (67) is disposed, with the aid of which the duct (61) can be closed.

42. Solar heating module according to Claim 41,
characterized in that,
with the aid of the flap (67), the duct (61) and the lower aperture section of the duct-like cavity (57) can be closed.

43. Solar heating module according to any of Claims 37 to 42,
characterized in that
the storage means (14) is comprised of vertical storage means segments (69), between which in each case a ductlike cavity (70) extending between upper and lower duct (60,61) is constructed which can be closed with the aid of a flap (71).

44. Solar heating module according to any of Claims 37 to 43,
characterized in that
the outlet (72) of the duct-like cavity (58) into the upper duct (60) can be closed with the aid of a flap (71).

45. Solar heating module according to any of Claims 37 to 44,
characterized in that,
in the upper duct (60), a ventilator is disposed before the upper air passage (65).

46. Solar heating module according to any of Claims 37 to 45,
characterized in that
the upper duct (60) communicates witha further duct (74) which can be made to communicate with a storage means.

47. Solar heating module according to Claim 46,
characterized in that
the further duct (74) can be caused to communicate with a further building zone.

## Revendications

1. Procédé pour chauffer et/ou refroidir un bâtiment en utilisant l'énergie solaire, les faces extérieures du bâtiment étant pourvues au moins partiellement de matériau calorifuge transparent et d'un dispositif d'absorption de l'énergie solaire et les pertes de chaleur et l'absorption de chaleur étant régulées à cause de la densité de flux d'énergie qui est naturellement moindre sur les faces extérieures des bâtiments de telle manière que les températures des pièces dans le bâtiment puissent être réglées,
**caractérisé en ce**
a) qu'un certain nombre d'apports de chaleur et de froid sont classés par une technique de mesure selon la quantité (puissance calorifique) et la qualité (niveau de température), sont détectés avec la variation dans le temps, selon la position locale dans un bâtiment et dans l'élément de construction respectif, les sources de chaleur et les dissipateurs thermiques de l'air extérieur et du rayonnement solaire, des faces extérieures du bâtiment derrière le calorifugeage transparent, des masses d'accumulation dans l'enveloppe du bâtiment et dans les enveloppes des pièces utilisées, des installations décentrales et centrales pour l'accumulation d'agents caloporteurs ainsi que de la chaleur perdue provenant de l'utilisation du bâtiment comme l'air d'évacuation, les eaux usées, I'éclairage, les appareils, la chaleur des personnes etc. étant détectés selon le lieu, le temps, la température et la quantité de chaleur et étant mis en mémoire en étant classés,
b) un certain nombre de besoins locaux de chauffage et de refroidissement et la variation de ces besoins sont détectés dans le temps dans le bâtiment par une technique de mesure en étant classés
c) les apports et les besoins classés selon la puissance calorifique, le niveau de température et l'heure, leur bilan étant établi dans un ordinateur central, donnent le besoin minimal supplémentaire d'alimentation à partir des installations conventionnelles de production de chaleur et de froid, le cas échéant centrales, dans une période de temps dans le bâtiment et les apports d'énergie classés et les besoins selon les positions locales et dans le temps sont affectés les uns aux autres dans l'ordinateur de telle manière qu'ils peuvent être compensés de manière prioritaire en gravité (fonctionnement passif) entre les faces extérieures isolées de manière transparente et les pièces intérieures adjacentes, de second ordre en fonctionnement actif avec l'énergie auxiliaire pendant de courtes périodes de temps, de troisième ordre dans les étages du bâtiment ou par de faibles différences de hauteur géodésiques et de dernier ordre dans le bâtiment - même dans l'échange circulaire local-temporel de plusieurs positions,
d) l'énergie thermique ou la chaleur de l'affectation des positions déterminée dans l'ordinateur est échangée dans l'espace de manière directe dans un réseau de tuyauteries et de canaux par un agent caloporteur et, le cas échéant, est également échangée en étant décalée dans le temps par une accumulation temporaire,
e) qu'à partir des températures des apports d'énergie, des températures de mélange isochrones pour l'optimalisation et pour l'affectation sont calculées pour s'adapter aux besoins en température et que des températures de mélange correspondantes sont produites dans des agents caloporteurs et transportées et/ou qu'une affectation qui se déroule à intervalles successifs dans le temps pour la satisfaction des besoins avec des températures ambiantes de mélange est calculée et que l'énergie est transmise réellement à partir des apports sans mélange des agents caloporteurs,
f) que le rayonnement solaire est transformé en énergie calorifique derrière le calorifugeage transparent (11) sur la face extérieure du bâtiment par un absorbeur (12) et que cette énergie calorifique est transférée à un agent caloporteur dans le thermoconducteur (13) qui est affecté à l'absorbeur (12) et que l'agent caloporteur est ensuite amené directement en fonction des besoins en chaleur ou en froid de la zone respective du bâtiment, pour l'alimentation passive, à au moins un thermoconducteur (15) côté pièce de la première zone de bâtiment affectée au module de chauffage solaire (10) et/ou, pour l'alimentation active, à au moins un autre thermoconducteur (15) côté pièce d'une autre zone de bâtiment qui se trouve en dehors des limites de la première zone de bâtiment affectée au module de chauffage solaire (10) ou partiellement ou en totalité à un dispositif de production de froid, ou que l'énergie calorifique du thermoconducteur (13) affecté à l'absorbeur (12) est accumulée dans le module de chauffage solaire (en 14) par l'agent par et qu'elle est ensuite amenée de manière passive décalée dans le temps à un thermoconducteur côté pièce (15) de la première zone du bâtiment et/ou de manière active à au moins un module de chauffage solaire (10) d'une autre zone de bâtiment et
g) que l'agent caloporteur réchauffé dans la face extérieure du bâtiment (91) d'une zone de bâtiment est amenée en alternance quelconque, soit passivement aux accumulateurs (14) et/ou aux thermoconducteurs (15) côté pièce de cette même zone de bâtiment, et/soit activement à une autre zone du bâtiment.

2. Procédé selon la revendication 1, **caractérisé en ce** que des apports de chaleur derrière le calorifugeage transparent, qui atteignent un niveau de température qui convient au fonctionnement d'une installation de refroidissement à absorption, sont détectés de manière séparée, sont convertis en grandeurs de froid, qu'il en est établi le bilan et l'affectation et qu'ils sont amenés à une installation de refroidissement par absorption.

3. Procédé selon l'une des revendications 1 ou 2, **caractérisé en ce** que la chaleur est empilée (en 14) selon la température en fonctionnement passif ou en gravité au-dessus de la hauteur du module de chauffage solaire (10) et/ou est transférée à l'intérieur du module en étant séparée en couches horizontales (en 213, 214, 215).

4. Procédé selon l'une des revendications 1 à 3, **caractérisé en ce** que l'agent caloporteur d'un étage de bâtiment respectif transfert la chaleur entièrement ou partiellement dans l'étage à un autre agent caloporteur ou agent réfrigérant qui transporte la chaleur entre l'étage du bâtiment et un accumulateur central (109), une installation centrale de chauffage ou de refroidissement de la centrale (GZ2) du bâtiment.

5. Procédé selon l'une des revendications 1 à 4, **caractérisé en ce** que l'agent caloporteur qui se trouve dans les accumulateurs (14) et/ou thermoconducteurs (15) côté pièce des modules de chauffage solaire (10) sur la face extérieure du bâtiment (92) de la zone du bâtiment qui est plus froide est accumulée temporairement, de manière qui se répète, dans l'étage respectif du bâtiment ou dans la zone de hauteur respective du bâtiment, que l'agent caloporteur réchauffé dans les accumulateurs (14) et/ou échangeurs thermiques (13) côté absorbeur de l'autre zone du bâtiment ou de l'autre face extérieure du bâtiment (91) est amené aux accumulateurs (14) et/ou thermoconducteurs (15) côté pièce de la première zone de bâtiment et/ou de la première face extérieure du bâtiment (92) et que l'agent caloporteur, qui a été accumulé temporairement et qui doit être réchauffé, est amené ensuite aux échangeurs thermiques (13) côté absorbeur et, le cas échéant, aux accumulateurs de l'autre face extérieure du bâtiment qui récupère la chaleur (91) ou que des agents caloporteurs de différente température et densité sont échangés dans un autre ordre dans une zone de hauteur du bâtiment par au moins une accumulation temporaire entre les deux zones de bâtiment (91, 92) qui existent au moins.

6. Procédé selon la revendication 5, **caractérisé en ce** qu'un agent caloporteur est remplacé dans le système, zone de bâtiment par zone de bâtiment, entièrement ou partiellement, dans un processus d'échange par un second agent, liquide ou gazeux, qui ne se mélange pas au premier agent.

7. Procédé selon l'une des revendications 1 à 6, **caractérisé en ce** que l'agent caloporteur réchauffé est amené entièrement ou partiellement à une machine frigorifique à absorption dont l'agent réfrigérant est amené dans au moins une zone du bâtiment par au moins un thermoconducteur (15 ; 116) côté pièce.

8. Procédé selon l'une des revendications 1 à 7, **caractérisé en ce** que le courant de l'agent caloporteur est réglé étage par étage par un réglage central d'étages et/ou pour l'ensemble du bâtiment par un réglage central en fonction des besoins en chaleur ou en froid des zones du bâtiment et des apports de chaleur de froid qui diffèrent localement.

9. Procédé selon l'une des revendications 1 à 8, **caractérisé en ce** que le thermoconducteur côté pièce du module de chauffage solaire (10) peut être également réglé manuellement (en 37) en complément et indépendamment des réglages centraux.

10. Installation pour réaliser le procédé selon l'une des revendications 1 à 9, **caractérisé** par un ou plusieurs modules de chauffage solaire (10) qui doivent être placés sur la face extérieure du bâtiment, le cas échéant à la manière d'un treillis ou à grande surface, avec respectivement un élément calorifuge transparent (11), protégé contre les intempéries, sur le côté détourné du rayonnement du soleil duquel est placé un absorbeur (12) avec un thermoconducteur (13) qui est relié à un thermoconducteur côté pièce (15) et à un accumulateur (14) par au moins une conduite aller intérieure (40, 42, 43, 44) et au moins une conduite retour intérieure (41) ou des canaux intérieurs de telle manière que l'agent caloporteur passe passivement par gravité dans le circuit du thermoconducteur côté absorbeur (13) à accumulateur (14) ou de l'accumulateur (14) au thermoconducteur côté pièce (15), une jonction avec d'autres modules de chauffage solaire et dispositifs de réglage centraux étant réalisée par des conduites aller et retour extérieures (18, 19) ou des canaux pour le transport actif de l'agent caloporteur,
que la conduite aller extérieure (18) et la conduite retour extérieure (19) sont reliées directement à des accumulateurs centraux, à une installation centrale de chauffage et/ou une installation centrale de refroidissement de la centrale du bâtiment (GZ2),
que des groupes de modules de chauffage solaire (10) peuvent être commandés par des pièces de robinetterie d'arrêt (107, 101) et des pompes ou des ventilateurs (108) placés de manière centrale pour les groupes, les étages (93) ou les zones de bâtiment et que les pompes ou ventilateurs (168), les pièces de robinetterie d'arrêt (107, 101, 45, 45a) et les clapets (59, 66, 67, 71, 75) sont reliés à des vérins qui peuvent être actionnés par un ordinateur pilote central commandé par un programme,
qu'un capteur de température (49) est placé sur l'absorbeur (12) d'au moins l'un des modules de chauffage solaire (10) affectés à une pièce (100), que des capteurs de température (50, 51) sont placés dans la zone supérieure et dans la zone inférieure de l'accumulateur (8) et qu'un capteur de température de la pièce (47) et un ajusteur de valeur de consigne de la température de la pièce (48) sont placés dans la pièce (100), ces capteurs étant reliés à un régulateur ou à l'ordinateur pilote central,
que l'ordinateur central pilote est relié aux éléments régulateurs du thermoconducteur central (109), de l'accumulateur d'étage (97) et de l'installation centrale de chauffage et d'une installation centrale de refroidissement de la centrale du bâtiment (GZ2).

11. Installation selon la revendication 10, **caractérisé en ce** que pour des bâtiments assez élevés et lors du fonctionnement avec un agent caloporteur fluide, la conduite aller extérieure (18) et la conduite retour extérieur (10) sont reliées dans chaque étage (93) à un thermoconducteur d'étage (109) et/ou à un accumulateur d'étage (97) qui sont respectivement raccordés hydrauliquement à l'installation centrale d'accumulation, à l'installation de chauffage et/ou de refroidissement de la centrale du bâtiment (GZ2).

12. Installation selon l'une des revendications 10 à 11, **caractérisé en ce** que l'accumulateur d'étage (97) est configuré comme un vase de mélange et/ou d'expansion.

13. Installation selon l'une des revendications 10 à 12, **caractérisé en ce** que les accumulateurs (14) et/ou thermoconducteurs (15) côté pièce et, le cas échéant, les absorbeurs (12) d'un groupe de modules de chauffage solaire (10) sont reliés à au moins un accumulateur d'étage (97) placé en hauteur, rempli de gaz et configuré comme un accumulateur échangeur, une pièce de robinetterie d'arrêt, comme une soupape d'arrêt, une vanne d'arrêt ou un clapet, étant placée dans au moins l'une des conduites de raccord (98, 99) de l'accumulateur d'étage (97) reliées à la conduite aller extérieure (18) et à la conduite retour extérieure (19).

14. Installation selon la revendication 13, **caractérisé en ce** qu'une membrane (104) est placée dans l'accumulateur d'étage (97) entre le compartiment gaz (102) et le compartiment eau (103).

15. Installation selon la revendication 13, **caractérisé en ce** que le compartiment gaz (102) de l'accumulateur d'étage (97) est rempli d'un gaz inerte tel que l'azote ou équivalent.

16. Installation selon l'une des revendications 10 à 15, **caractérisé en ce** qu'un thermoconducteur supplémentaire (116) est affecté à au moins une zone de pièce, thermoconducteur qui est relié par une conduite aller (117) et une conduite retour (118) directement ou indirectement à une installation centrale de chauffage de la centrale du bâtiment (GZ2) et/ou à une installation centrale de refroidissement.

17. Installation selon la revendication 16, **caractérisé en ce** que le thermoconducteur supplémentaire (116) est placé devant le thermoconducteur côté pièce (15) d'un module de chauffage solaire (10) et qu'il est configuré comme un radiateur tubulaire ou équivalent.

18. Installation selon la revendication 16, **caractérisé en ce** que le thermoconducteur supplémentaire (116) est placé dans ou sur un mur, dans ou sur le plafond ou au sol.

19. Installation selon l'une des revendications 10 à 18, **caractérisé en ce** qu'au moins un absorbeur (12) des modules de chauffage solaire (10) est relié à une machine frigorifique à absorption dont l'évaporateur est relié à au moins un thermoconducteur supplémentaire (116) placé dans ou sur un mur et/ou dans ou sur un plafond.

20. Installation selon l'une des revendications 10 à 19, **caractérisé en ce** que chaque thermoconducteur (13), accumulateur (14) et thermoconducteur côté pièce (15) affecté à l'absorbeur (12) est relié à la conduite aller extérieure (18) du module de chauffage solaire (10) au moyen d'une vanne à plusieurs voies (130, 131) par laquelle la commande du passage de l'écoulement peut être modifiée sans grande perte de pression respectivement par rotation d'un disque de soupape (134).

21. Installation selon la revendication 20, **caractérisé en ce** que chaque vanne à plusieurs voies (130, 131) est reliée à un moteur de commande (132).

22. Installation selon la revendication 20,**caractérisé en ce** que la vanne à plusieurs voies (130) est constituée par un corps de base (133) qui est cylindrique de manière générale et par un disque de soupape (134) qui est positionné en étant rotatif pour modifier la commande du passage de l'écoulement respectivement pour une rotation de 30 degrés, que des découpures (136) sont ménagées en étant décalées de 120 degrés les unes par rapport aux autres dans la zone inférieure de la surface de l'enveloppe du corps de base cylindrique (133), découpures auxquelles se raccordent respectivement l'absorbeur (12), l'accumulateur (14) et le thermoconducteur (15), qu'une enveloppe (140) ajustée dans la zone inférieure du corps de base cylindrique (133) est configurée sur le disque de soupape (134) sur une demie circonférence de cercle de 180 degrés, enveloppe qui est divisée par un évidement (141) de 30 degrés en un segment d'enveloppe de 90 degrés (142) et un segment d'enveloppe de 60 degrés (143) et que trois découpures (144) de 30 degrés de large sont configurées dans le disque de soupape (134) à des intervalles de 120 degrés et 90 degrés parmi lesquelles l'une (144) se rattache à l'évidement (141) et les autres découpures (144) qui suivent cette découpure (144) ont respectivement un écart de 120 degrés et que le compartiment de soupape configuré au-dessus du disque de soupape (134) est relié à la conduite aller extérieure (18) et présente, dans la surface circulaire côté sol, trois découpures (145) d'une largeur de 30 degrés parmi lesquelles l'une des découpures est orientée coaxialement par rapport à l'axe du milieu de l'une des découpures (136) et que les autres découpures (145) sont placées en étant décalées par rapport à celle-ci de 30 ou de 60 degrés.

23. Installation selon la revendication 22, **caractérisé en ce** que le corps de base (133) est configuré en étant conique ou conoïde, corps de base dans lequel est positionné le disque de soupape (134) avec une surface d'enveloppe également conique ou conoïde, disque dans lequel les découpures (144) sont ménagées dans un plan qui correspond aux découpures (145) pour la jonction à la conduite aller extérieure (18) et les découpures (136) pour le raccord de l'absorbeur (12), de l'accumulateur (14) et du thermoconducteur côté pièce (15) sont ménagées dans un plan sous-jacent.

24. Installation selon la revendication 22 ou 23, **caractérisé en ce** que chaque vanne à plusieurs voies (130, 131) est reliée à une unité d'ordinateur au moyen de laquelle le chargement et le déchargement de chaque accumulateur (14) ainsi que le débit de chaleur de chaque thermoconducteur côté pièce (15) et donc la consommation de chaleur de chacune des pièces (100) peuvent être déterminés par la détection de la position du disque de soupape (134).

25. Installation selon la revendication 20, **caractérisé en ce** que la vanne à plusieurs voies (250) est constituée par un corps de base (251) qui est cylindrique de manière générale avec quatre raccords décalés de 90 degrés dans un plan et un disque de soupape (256) positionné en étant rotatif pourr modifier la commande du passage de l'écoulement respectivement pour une rotation de 45 degrés et que des canaux (257, 258, 259, 260) sont configurés dans le disque de soupape (256) qui relient, dans une position du disque de soupape (256), des raccords opposés (252, 254 ; 253, 255) et qui relient, dans une autre position du disque de soupape, respectivement deux raccords situés l'un à côté de l'autre (252, 253 ; 254, 255).

26. Module de chauffage solaire (10) pour transformer le rayonnement solaire en énergie calorifique et pour être utilisé pour le chauffage et/ou le refroidissement d'un bâtiment, pour réaliser le procédé selon les revendications 1 à 9 et pour être utilisé dans une installation selon les revendications 10 à 25, pour lequel un absorbeur (12) est placé sur le côté dtérouné du rayonnement du soleil d'un élément calorifuge (11) transparent, protégé contre les intempéries, absorbeur qui est relié à un thermoconducteur (13) côté absorbeur qui est relié à un thermoconducteur côté pièce (15) et à un accumulateur (14) par au moins une conduite aller intérieure (40, 42, 43, 44) et au moins une conduite retour intérieure (41) ou des canaux intérieurs de telle manière que l'agent caloporteur passe passivement par gravité dans le circuit du thermoconducteur côté absorbeur (13) au thermoconducteur côté pièce (15), de l'absorbeur (12) à l'accumulateur (14) ou de l'accumulateur (14) au thermoconducteur côté pièce (15) ou vice-versa, **caractérisé en ce** que l'accumulateur (14) dans le module de chauffage solaire (10) est placé un peu plus haut que l'absorbeur (12) avec le thermoconducteur (13) et un peu plus bas que le thermoconducteur côté pièce (15) et spatialement entre les deux (12, 15) et que le thermoconducteur (13) qui est affecté à l'absorbeur (12), l'accumulateur (14) et le thermoconducteur côté pièce (15) sont reliés entre eux et, le cas échéant, à la conduite aller extérieure (18) et/ou à la conduite retour extérieure (19) du module de chauffage solaire (10) au moyen d'éléments d'arrêt et de réglage (24, 25, 26, 35, 36, 37 ; 45, 45a) ou au myoen d'une vanne à plusieurs voies (130, 131 ; 140 ; 250).

27. Module de chauffage solaire selon la revendication 26, **caractérisé en ce** que le module de chauffage solaire (10) avec un agent caloporteur derrière le calorifugeage transparent (11) est constitué par des sous-unités séparées dans le sens horizontal qui contiennent respectivement un absorbeur (212) avec un thermoconducteur (213), un accumulateur (214) et un thermoconducteur côté pièce (215) raccordé par une vanne à trois voies (150) qui sont reliés par les conduites aller et retour intérieures (40, 41) de telle manière que l'agent caloporteur circule dans chaque sous-unité (212 à 215) par gravité et qu'il peut être raccordé à une installation globale par une autre position des vannes (150) en étant couplé de manière uniforme comme module d'ensemble par l'intermédiaire des conduites aller et retour extérieures (18, 19).

28. Module de chauffage solaire selon la revendication 26, **caractérisé en ce** qu'une jonction aux autres modules de chauffage solaire et aux dispositifs centraux pour le transport actif de l'agent caloporteur peut être réalisée en plus par des conduites aller et retour extérieure (18, 19) ou des canaux.

29. Module de chauffage solaire selon l'une des revendications 26 à 28, **caractérisé en ce** qu'une partie du bâtiment, de l'enveloppe du bâtiment ou de l'ossature du bâtiment est utilisée elle-même comme accumulateur (14 ; 54).

30. Module de chauffage solaire selon l'une des revendications 26 à 29, **caractérisé en ce** que tous les accumulateurs (14) et les conduites ou canaux de jonction sont entourés entièrement ou partiellement par une couche calorifuge (38).

31. Module de chauffage solaire selon l'une des revendications 26 à 30, **caractérisé en ce** que élément calorifuge transparent (11) est placé à une certaine distance (S) de l'absorbeur (12) en formant une cavité de type canal (58) qui est ouverte en bas et en haut et qui peut être fermée sur la portion d'extrémité supérieure au moyen d'un clapet (59).

32. Module de chauffage solaire selon l'une des revendications 26 à 31, **caractérisé en ce** que chaque module de chauffage solaire (10) est configuré pour le montage au-dessous d'une fenêtre (57) d'un étage jusqu'à l'arête supérieure des fenêtres de l'étage situé au-dessous ou à hauteur de l'étage près des éléments de fenêtre ou indépendamment des fenêtres à grande surface sur le mur ou dans le toit comme pièce préfabriquée, l'agent d'accumulation constitué par de l'eau ou de la pierre pouvant être rempli en étant séparé après le montage des modules de chauffage solaire (10).

33. Module de chauffage solaire selon l'une des revendications 26 à 32, **caractérisé en ce** qu'un élément photoélectrique (76) est placé à côté de l'élément calorifuge (11), élément photoélectrique dont l'énergie électrique produite peut être amenée à une pompe (77) placée dans les conduites du module de chauffage solaire (10), de préférence dans la conduite aller intérieure (40).

34. Module de chauffage solaire selon l'une des revendications 26 à 33, **caractérisé en ce** que des pièces de robinetterie d'arrêt et de réglage (45) sont placées dans les conduites de raccord aller (42, 43, 44) reliées à la conduite aller intérieure (40) du thermoconducteur côté absorbeur (15), de l'accumulateur (14) et du thermoconducteur côté pièce (15).

35. Module de chauffage solaire selon l'une des revendications 26 à 34, **caractérisé en ce** qu'une pièce de robinetterie d'arrêt et de réglage (45a) est placée dans la conduite aller intérieure (40) entre les conduites de raccord aller (44, 43) du thermoconducteur côté pièce (15) et de l'accumulateur (14).

36. Module de chauffage solaire selon l'une des revendications 26 à 35, **caractérisé en ce que** des pièces de robinetterie d'arrêt telles que vannes et clapets sont placées dans la conduite aller extérieure (18) et la conduite retour extérieure (19).

37. Module de chauffage solaire selon l'une des revendications 26 à 36, **caractérisé en ce** que des pompes ou ventilateurs pour le refoulement de l'agent caloporteur sont placés dans la conduite aller extérieure (18) ou la conduite retour extérieure (19).

38. Module de chauffage solaire selon l'une des revendications 26 à 37, **caractérisé en ce** qu'un espace creux (58), configuré entre l'élément calorifuge (11) et l'absorbeur (12), est prévu, que l'espace creux de type canal (58) est relié, au moyen d'un canal (60, 61) configuré respectivement au-dessus et au-dessous de l'accumulateur (14), à un canal (62), configuré derrière le thermoconducteur (15), qui est relié à l'aide d'un passage d'air (65) placé sur la portion d'extrémité supérieure et inférieure (63, 64) du thermoconducteur (15) à la pièce adjacente (100).

39. Module de chauffage solaire selon la revendication 38, **caractérisé en ce** que les passages d'air (65) sont configurés comme des clapets (66) ou équivalent.

40. Module de chauffage solaire selon la revendication 39, **caractérisé en ce** que le thermoconducteur (15) est configuré comme une plaque.

41. Module de chauffage solaire selon l'une des revendications 38 à 40, caractérisé en ce qu'un clapet (67) est placé à la sortie du canal inférieur (61), clapet au moyen duquel le canal (61) peut être fermé.

42. Module de chauffage solaire selon la revendication 41, **caractérisé en ce** que le canal (61) et la portion inférieure d'ouverture de l'espace creux de type canal (57) peuvent être fermés au moyen du clapet (67).

43. Module de chauffage solaire selon l'une des revendications 37 à 42, **caractérisé en ce** que l'accumulateur (14) est constitué par des segments d'accumulateur verticaux (69) entre lesquels est configuré respectivement un espace creux de type canal (70) qui s'étend entre le canal supérieur et le canal inférieur (60, 61) et qui peut être fermé au moyen d'un clapet (71).

44. Module de chauffage solaire selon l'une des revendications 37 à 43, **caractérisé en ce** que la sortie (72) de l'espace creux de type canal (58) dans le canal supérieur (60) peut être fermée au moyen d'un clapet (71).

45. Module de chauffage solaire selon l'une des revendications 37 à 44, **caractérisé en ce** qu'un ventilateur est placé dans le canal supérieur (60) devant le passage d'air supérieur (65).

46. Module de chauffage solaire selon l'une des revendications 37 à 45, **caractérisé en ce** que le canal supérieur (60) est relié à un autre canal (74) qui peut être relié à un accumulateur.

47. Module de chauffage solaire selon la revendication 46, **caractérisé en ce** que l'autre canal (74) peut être relié à une autre zone de bâtiment.
